# EUROPEAN PATENT APPLICATION

(11) **EP 4 848 775 A1**
(43) Date of publication of application: **02.12.2026**
(21) Application number: 25751181.6
(22) Date of filing: 21.01.2025
(51) Int. Cl.: H04W 12/084

(54) **SECURE COMMUNICATION METHOD AND COMMUNICATION APPARATUS**

(30) Priority: 08.02.2024 CN 202410178215
(71) Applicant: Huawei Technologies Co., Ltd., Shenzhen, Guangdong 518129 (CN)
(72) Inventor: GUO, Tao, Shenzhen, Guangdong 518129 (CN); LI, He, Shenzhen, Guangdong 518129 (CN)
(74) Representative: Huawei European IPR
(86) International application number: PCT/CN2025/073558
(87) International publication number: WO 2025/167579

(57) **Abstract**

This application provides a secure communication method and a communication apparatus. The method includes: receiving a token request message from a federated learning server, and sending a first token to the federated learning server after determining that the federated learning server is allowed to obtain, from a client apparatus, a first model corresponding to a first analytics identifier, and that the client apparatus is allowed to obtain a second model from the federated learning server. According to the method, information leakage of the second model can be avoided, thereby reducing potential security risks.

## Description

This application claims priority to Chinese Patent Application No. 202410178215.6, filed with the China National Intellectual Property Administration on February 8, 2024 and entitled "SECURE COMMUNICATION METHOD AND COMMUNICATION APPARATUS", which is incorporated herein by reference in its entirety.

### TECHNICAL FIELD

Embodiments of this application relate to the field of communication technologies, and more specifically, to a secure communication method and a communication apparatus.

### BACKGROUND

As a machine learning technology in a core network, federated learning (federated learning, FL) enables a plurality of participants (for example, a server network data analytics function (network data analytics function, NWDAF) and a client NWDAF) to perform local training and exchange model parameters through security mechanisms without exchanging training data, thereby achieving collaborative training. During the federated learning process, model information is exchanged between the server NWDAF and the client NWDAF, which may lead to model information leakage and pose security risks.

### SUMMARY

This application provides a secure communication method and a communication apparatus to reduce potential security risks.

According to a first aspect, a communication method is provided. The method may be performed by a first network element, or may be performed by a chip, a circuit, or a logical module of the first network element. This is not limited in this application. For ease of description, the following provides descriptions by using an example in which the method is performed by the first network element.

The method includes: receiving a token request message from a federated learning server, where the token request message includes a first analytics identifier, an identifier of the federated learning server, and an identifier of a client apparatus; and sending a first token to the federated learning server after determining that the federated learning server is allowed to obtain, from the client apparatus, a first model corresponding to the first analytics identifier, and that the client apparatus is allowed to obtain a second model from the federated learning server.

Based on the foregoing solution, before sending the first token, the first network element determines that the federated learning server is allowed to obtain, from the client apparatus, the first model corresponding to the first analytics identifier, and determines that the client apparatus is allowed to obtain, from the federated learning server, the second model generated based on the first model. In other words, particularity of a federated learning scenario is fully considered, so that both permission of a server NWDAF to obtain the first model from a client NWDAF and permission of the client NWDAF to obtain, from the server NWDAF, the second model generated based on the first model are checked. In this way, the federated learning server delivers, to the client apparatus, the second model obtained after federated learning is completed, so that information leakage of the second model is not caused, and security risks are reduced. In other words, a security problem like loss of model property rights and assets of a device vendor is avoided.

In some implementations, the first model is generated by the client apparatus and is used by the federated learning server to generate the second model; and/or the second model is provided by the federated learning server and is used by the client apparatus to generate the first model.

In some implementations, the method further includes: the first token indicates that the client apparatus is allowed to obtain the second model from the federated learning server.

Based on the foregoing solution, compared with an access token in the conventional technology, the first token in this application indicates that the federated learning server is allowed to obtain, from the client apparatus, the first model corresponding to the first analytics identifier, and indicates that the client apparatus is allowed to obtain the second model from the federated learning server. Therefore, the federated learning server may share the second model with the client apparatus, and the client apparatus may also report the first model obtained through local training to the federated learning client. Both the federated learning server and the client apparatus have permission to obtain a model of the other party. This can reduce model information leakage, reduce potential security risks, avoid loss of model property rights and assets of the device vendor, and the like.

In some implementations, the method further includes: sending third indication information to the federated learning server, where the third indication information indicates that the client apparatus is allowed to obtain the second model from the federated learning server.

Based on the foregoing solution, the first network element may deliver the third indication information to indicate that the client apparatus is allowed to obtain the second model from the federated learning server, and then the federated learning server may send, based on the third indication information, the second model to the client apparatus that has the model obtaining permission, thereby avoiding model information leakage and ensuring security of model assets of the device vendor.

In some implementations, determining that the client apparatus is allowed to obtain the second model from the federated learning server may be specifically: determining that a device vendor identifier of the client apparatus is included in a first interoperability indicator corresponding to the first analytics identifier supported by the federated learning server.

In other words, the first network element determines that the first interoperability indicator corresponding to the first analytics identifier supported by the federated learning server includes the device vendor identifier of the client apparatus.

Based on the foregoing solution, determining that the device vendor identifier of the client apparatus is included in the first interoperability indicator corresponding to the first analytics identifier supported by the federated learning server can enable the federated learning server to deliver, to the client apparatus, the second model obtained after federated learning is completed, thereby avoiding information leakage of the second model, reducing security risks, avoiding loss of model property rights and assets of the device vendor, and the like.

In some implementations, determining that the client apparatus is allowed to obtain the second model from the federated learning server may be specifically: determining that a second interoperability indicator corresponding to the first analytics identifier supported by the client apparatus is included in the first interoperability indicator corresponding to the first analytics identifier supported by the federated learning server.

In other words, the first network element determines that the first interoperability indicator corresponding to the first analytics identifier supported by the federated learning server includes the second interoperability indicator corresponding to the first analytics identifier supported by the client apparatus.

In some implementations, determining that the client apparatus is allowed to obtain the second model from the federated learning server may be specifically: determining that a second interoperability indicator corresponding to the first analytics identifier supported by the client apparatus is included in the first interoperability indicator corresponding to the first analytics identifier supported by the federated learning server.

In other words, the first network element determines that the first interoperability indicator corresponding to the first analytics identifier supported by the federated learning server includes the second interoperability indicator corresponding to the first analytics identifier supported by the client apparatus.

Based on the foregoing solution, determining that the second interoperability indicator corresponding to the first analytics identifier supported by the client apparatus is included in the first interoperability indicator corresponding to the first analytics identifier supported by the federated learning server can enable the federated learning server to deliver, to the client apparatus, the second model obtained after federated learning is completed, thereby avoiding information leakage of the second model, reducing security risks, avoiding loss of model property rights and assets of the device vendor, and the like. In addition, the second interoperability indicator corresponding to the first analytics identifier supported by the client apparatus is limited to be included in the first interoperability indicator corresponding to the first analytics identifier supported by the federated learning server, so that all consumers of the second model have permission to obtain model information from the client apparatus. This can prevent the client apparatus from leaking the second model to another consumer that does not have model obtaining permission, and achieve a purpose of ensuring model asset security in a dual manner.

In some implementations, before receiving the token request message from the federated learning server, the method further includes: receiving a first registration request message from the federated learning server, where the first registration request message includes the first interoperability indicator; and sending a first registration response message to the federated learning server, where the first registration response message indicates that registration is completed.

Based on the foregoing solution, in the federated learning registration procedure, the first network element may obtain the first interoperability indicator corresponding to the first analytics identifier supported by the federated learning server, and is further configured to determine that the device vendor identifier of the client apparatus is included in the first interoperability indicator corresponding to the first analytics identifier supported by the federated learning server, which indicates that the client apparatus has permission to obtain the second model. In this case, the federated learning server delivers the second model to the client apparatus, which does not cause model information leakage, can avoid loss of model property rights and assets of the device vendor, and the like.

In some implementations, before receiving the token request message from the federated learning server, the method further includes: receiving a second registration request message from the client apparatus, where the second registration request message includes the device vendor identifier of the client apparatus; and sending a second registration response message to the client apparatus, where the second registration response message indicates that registration is completed.

Based on the foregoing solution, in the federated learning registration procedure, the first network element may obtain the device vendor identifier of the client apparatus, and is further configured to determine that the device vendor identifier of the client apparatus is included in the first interoperability indicator corresponding to the first analytics identifier supported by the federated learning server, which indicates that the client apparatus has the permission to obtain the second model. In this case, the federated learning server delivers the second model to the client apparatus, which does not cause model information leakage, can avoid loss of model property rights and assets of the device vendor, and the like.

In some implementations, determining that the federated learning server is allowed to obtain the first model corresponding to the first analytics identifier from the client apparatus may be specifically: determining that a device vendor identifier of the federated learning server is included in the second interoperability indicator corresponding to the first analytics identifier supported by the client apparatus.

In other words, the first network element determines that the second interoperability indicator corresponding to the first analytics identifier supported by the client apparatus includes the device vendor identifier of the federated learning server.

Based on the foregoing solution, determining that the device vendor identifier of the federated learning server is included in the second interoperability indicator corresponding to the first analytics identifier supported by the client apparatus can enable the federated learning server to have permission to obtain the first model from the client apparatus, thereby avoiding information leakage of the first model and reducing security risks.

In some implementations, determining that the federated learning server is allowed to obtain the first model corresponding to the first analytics identifier from the client apparatus may be specifically: determining that the first interoperability indicator corresponding to the first analytics identifier supported by the federated learning server is included in the second interoperability indicator corresponding to the first analytics identifier supported by the client apparatus.

In other words, the first network element determines that the second interoperability indicator corresponding to the first analytics identifier supported by the client apparatus includes the first interoperability indicator corresponding to the first analytics identifier supported by the federated learning server.

Based on the foregoing solution, determining that the second interoperability indicator corresponding to the first analytics identifier supported by the client apparatus is included in the first interoperability indicator corresponding to the first analytics identifier supported by the federated learning server can enable the federated learning server to have the permission to obtain the first model from the client apparatus, thereby avoiding information leakage of the first model and reducing security risks. In addition, the second interoperability indicator corresponding to the first analytics identifier supported by the client apparatus is limited to be included in the first interoperability indicator corresponding to the first analytics identifier supported by the federated learning server, so that all consumers of the first model have permission to obtain model information from the federated learning server. This can prevent the federated learning server from leaking the first model to another consumer that does not have model obtaining permission, and achieve a purpose of ensuring model asset security in a dual manner.

In some implementations, before determining that the client apparatus is allowed to obtain the second model from the federated learning server, the method further includes: determining, based on the identifier of the federated learning server and/or the identifier of the client apparatus, that the federated learning server and/or the client apparatus supports federated learning; determining, based on information about a first service and/or a federated learning capability type included in the token request message, that the token request message is associated with federated learning, where the first service is used for federated learning between the federated learning server and the client apparatus; or determining, based on first indication information, that the federated learning server sends the second model to the client apparatus, where the first indication information indicates to send the second model to the client apparatus.

Based on the foregoing solution, the first network element may determine, based on at least one of the identifier of the federated learning server and/or the identifier of the client apparatus, the information about the first service and/or the federated learning capability type, the first indication information, or second indication information, that the client apparatus is allowed to obtain the second model from the federated learning server. In other words, at least one of the identifier of the federated learning server and/or the identifier of the client apparatus, the information about the first service and/or the federated learning capability type, the first indication information, or the second indication information may be used as a trigger condition for the first network element to determine that the client apparatus is allowed to obtain the second model from the federated learning server.

According to a second aspect, a communication method is provided. The method may be performed by a federated learning server, or may be performed by a chip, a circuit, or a logical module of the federated learning server. This is not limited in this application. For ease of description, the following provides descriptions by using an example in which the method is performed by the federated learning server.

The method includes: sending a token request message to a first network element, where the token request message includes a first analytics identifier, an identifier of the federated learning server, and an identifier of a client apparatus; receiving a first token from the first network element, or receiving a first token and third indication information from the first network element, where the first token indicates that the client apparatus is allowed to obtain a second model from the federated learning server, and the third indication information indicates that the client apparatus is allowed to obtain the second model from the federated learning server; obtaining, from the client apparatus based on the first token, a first model corresponding to the first analytics identifier; generating the second model based on the first model; and sending the second model to the client apparatus based on the first token and/or the third indication information.

In some implementations, sending the second model to the client apparatus includes: sending the second model to the client apparatus based on second indication information and/or a local configuration, where the second indication information indicates that the client apparatus expects to obtain the second model.

Based on the foregoing solution, before sending the second model to the client apparatus, the federated learning server determines, based on the second indication information and/or the local configuration, that the client apparatus expects to obtain the second model. In other words, the federated learning server sends the second model to the client apparatus when the client apparatus needs to obtain the second model. This can reduce unnecessary transmission overheads, reduce model leakage risks, and protect asset security of the model.

In some implementations, the method further includes: receiving the second indication information from the first network element or the client apparatus.

In some implementations, that the client apparatus is allowed to obtain the second model from the federated learning server includes: a device vendor identifier of the client apparatus is included in a first interoperability indicator corresponding to the first analytics identifier supported by the federated learning server.

In some implementations, before sending the token request message to the first network element, the method further includes: sending a first registration request message to the first network element, where the first registration request message includes the first interoperability indicator; and receiving a first registration response message from the first network element, where the first registration response message indicates that registration is completed.

For beneficial effects of the second aspect and some implementations of the second aspect, correspondingly refer to the related descriptions of the first aspect. Details are not described herein again.

According to a third aspect, a communication method is provided. The method may be performed by a federated learning server, or may be performed by a chip, a circuit, or a logical module of the federated learning server. This is not limited in this application. For ease of description, the following provides descriptions by using an example in which the method is performed by the federated learning server.

The method includes: sending a discovery request message to a first network element, where the discovery request message includes a first analytics identifier; receiving a discovery response message from the first network element, where the discovery response message includes an identifier of a client apparatus and a device vendor identifier of the client apparatus; obtaining, from the client apparatus, a first model corresponding to the first analytics identifier; generating a second model based on the first model; and sending the second model to the client apparatus after determining, based on the device vendor identifier of the client apparatus, that the client apparatus is allowed to obtain the second model from the federated learning server.

Based on the foregoing solution, after obtaining the second model, the federated learning server performs permission check on the client apparatus based on the device vendor identifier of the client obtained in a discovery procedure, that is, determines that the client apparatus is allowed to obtain the second model from the federated learning server, or in other words, the client apparatus has permission to obtain the second model. In this case, the federated learning server may deliver the second model to the client apparatus, thereby reducing risks of information leakage of the second model, avoiding loss of model property rights and assets of a device vendor, and the like.

In some implementations, determining, based on the device vendor identifier of the client apparatus, that the client apparatus is allowed to obtain the second model from the federated learning server includes: determining that the device vendor identifier of the client apparatus is included in a first interoperability indicator corresponding to the first analytics identifier supported by the federated learning server.

In some implementations, before sending the discovery request message to the first network element, the method further includes: sending a first registration request message to the first network element, where the first registration request message includes the first interoperability indicator; and receiving a first registration response message from the first network element, where the first registration response message indicates that registration is completed.

In some implementations, sending the second model to the client apparatus includes: sending the second model to the client apparatus based on second indication information and/or a local configuration, where the second indication information indicates that the client apparatus expects to obtain the second model.

In some implementations, the method further includes: receiving the second indication information from the first network element or the client apparatus.

For beneficial effects of the third aspect and some implementations of the third aspect, correspondingly refer to the related descriptions of the second aspect. Details are not described herein again.

According to a fourth aspect, a communication method is provided. The method may be performed by a first network element, or may be performed by a chip, a circuit, or a logical module of the first network element. This is not limited in this application. For ease of description, the following provides descriptions by using an example in which the method is performed by the first network element.

The method includes: receiving a discovery request message from a federated learning server, where the discovery request message includes a first analytics identifier; sending a discovery response message to the federated learning server when determining that the federated learning server is allowed to obtain, from a client apparatus, a first model corresponding to the first analytics identifier, where the discovery response message includes an identifier of the client apparatus; receiving a request message from the federated learning server, where the request message is used to request to confirm whether the client apparatus is allowed to obtain a second model from the federated learning server, the request message includes the first analytics identifier, and the first model is generated by the client apparatus and is used by the federated learning server to generate the second model; and sending a response message to the federated learning server when determining that the client apparatus is allowed to obtain the second model from the federated learning server.

Based on the foregoing solution, after obtaining the second model, the federated learning server requests the first network element to check permission of the client apparatus, to determine that the client apparatus is allowed to obtain the second model from the federated learning server. In this way, the federated learning server may deliver the second model to the client apparatus that has model obtaining permission, thereby avoiding model information leakage, reducing potential security risks, avoiding loss of model property rights and assets of a device vendor, and the like.

In some implementations, the response message includes third indication information, and the third indication information indicates that the client apparatus is allowed to obtain the second model from the federated learning server.

In some implementations, determining that the client apparatus is allowed to obtain the second model from the federated learning server includes: determining that a device vendor identifier of the client apparatus is included in a first interoperability indicator corresponding to the first analytics identifier supported by the federated learning server.

In some implementations, before receiving the discovery request message from the federated learning server, the method further includes: receiving a first registration request message from the federated learning server, where the first registration request message includes the first interoperability indicator; and sending a first registration response message to the federated learning server, where the first registration response message indicates that registration is completed.

In some implementations, before receiving the discovery request message from the federated learning server, the method further includes: receiving a second registration request message from the client apparatus, where the second registration request message includes the device vendor identifier of the client apparatus; and sending a second registration response message to the client apparatus, where the second registration response message indicates that registration is completed.

In some implementations, determining that the federated learning server is allowed to obtain the first model corresponding to the first analytics identifier from the client apparatus includes: determining that the device vendor identifier of the federated learning server is included in a second interoperability indicator corresponding to the first analytics identifier supported by the client apparatus.

For beneficial effects of the fourth aspect and some implementations of the fourth aspect, correspondingly refer to the related descriptions of the first aspect. Details are not described herein again.

According to a fifth aspect, a communication method is provided. The method may be performed by a federated learning server, or may be performed by a chip, a circuit, or a logical module of the federated learning server. This is not limited in this application. For ease of description, the following provides descriptions by using an example in which the method is performed by the federated learning server.

The method includes: sending a discovery request message to a first network element, where the discovery request message includes a first analytics identifier; receiving a discovery response message from the first network element, where the discovery response message includes an identifier of a client apparatus; obtaining, from the client apparatus, a first model corresponding to the first analytics identifier; generating a second model based on the first model; sending a request message to the first network element, where the request message is used to request to confirm whether the client apparatus is allowed to obtain the second model from the federated learning server, and the request message includes the first analytics identifier; receiving a response message from the first network element, where the response message indicates that the client apparatus is allowed to obtain the second model from the federated learning server; and sending the second model to the client apparatus.

In some implementations, the method further includes: receiving third indication information from the first network element, where the third indication information indicates that the client apparatus is allowed to obtain the second model from the federated learning server.

In some implementations, sending the second model to the client apparatus includes: sending the second model to the client apparatus based on second indication information and/or a local configuration, where the second indication information indicates that the client apparatus expects to obtain the second model.

In some implementations, the method further includes: receiving the second indication information from the first network element or the client apparatus.

For beneficial effects of the fifth aspect and some implementations of the fifth aspect, correspondingly refer to the related descriptions of the second aspect. Details are not described herein again.

According to a sixth aspect, a communication method is provided. The method may be performed by a first network element, or may be performed by a chip, a circuit, or a logical module of the first network element. This is not limited in this application. For ease of description, the following provides descriptions by using an example in which the method is performed by the first network element.

The method includes: receiving a token request message from a federated learning server, where the token request message includes a first analytics identifier, an identifier of the federated learning server, and an identifier of a client apparatus; and sending a first token to the federated learning server after determining that a device vendor identifier of the client apparatus is included in a first interoperability indicator corresponding to the first analytics identifier supported by the federated learning server, and that a device vendor identifier of the federated learning server is included in a second interoperability indicator corresponding to the first analytics identifier supported by the client apparatus.

For beneficial effects of another possible implementation and some implementations, correspondingly refer to the related descriptions of the first aspect. Details are not described herein again.

According to a seventh aspect, a communication apparatus is provided. The communication apparatus may include modules or units that are in a one-to-one correspondence with the method/operations/steps/actions described in the first aspect. The modules or units may be implemented by using a hardware circuit, software, or a combination of a hardware circuit and software.

In some implementations, the apparatus includes: a transceiver unit, configured to: receive a token request message from a federated learning server, where the token request message includes a first analytics identifier, an identifier of the federated learning server, and an identifier of a client apparatus; and send a first token to the federated learning server after determining that the federated learning server is allowed to obtain, from the client apparatus, a first model corresponding to the first analytics identifier, and that the client apparatus is allowed to obtain a second model from the federated learning server.

The transceiver unit may perform receiving and sending in the first aspect and the possible implementations of the first aspect, and a processing unit may perform processing other than receiving and sending in the first aspect and the possible implementations of the first aspect.

According to an eighth aspect, a communication apparatus is provided. The communication apparatus may include modules or units that are in a one-to-one correspondence with the method/operations/steps/actions described in the second aspect. The modules or units may be implemented by using a hardware circuit, software, or a combination of a hardware circuit and software.

In some implementations, the apparatus includes: a transceiver unit, configured to: send a token request message to a first network element, where the token request message includes a first analytics identifier, an identifier of a federated learning server, and an identifier of a client apparatus; receive a first token from the first network element, or receive a first token and third indication information from the first network element, where the first token indicates that the client apparatus is allowed to obtain a second model from the federated learning server, and the third indication information indicates that the client apparatus is allowed to obtain the second model from the federated learning server; and obtain, from the client apparatus based on the first token, a first model corresponding to the first analytics identifier; and a processing unit, configured to generate the second model based on the first model. The transceiver unit is further configured to send the second model to the client apparatus based on the first token and/or the third indication information.

The transceiver unit may perform receiving and sending in the second aspect and the possible implementations of the second aspect. Optionally, the apparatus further includes the processing unit, and the processing unit may perform processing other than receiving and sending in the second aspect and the possible implementations of the second aspect.

According to a ninth aspect, a communication apparatus is provided. The communication apparatus may include modules or units that are in a one-to-one correspondence with the method/operations/steps/actions described in the third aspect. The modules or units may be implemented by using a hardware circuit, software, or a combination of a hardware circuit and software.

In some implementations, the apparatus includes: a transceiver unit, configured to: send a discovery request message to a first network element, where the discovery request message includes a first analytics identifier; receive a discovery response message from the first network element, where the discovery response message includes an identifier of a client apparatus and a device vendor identifier of the client apparatus; and obtain, from the client apparatus, a first model corresponding to the first analytics identifier; and a processing unit, configured to generate a second model based on the first model. The transceiver unit is further configured to send the second model to the client apparatus after determining, based on the device vendor identifier of the client apparatus, that the client apparatus is allowed to obtain the second model from a federated learning server.

The transceiver unit may perform receiving and sending in the third aspect and the possible implementations of the third aspect. Optionally, the apparatus further includes the processing unit, and the processing unit may perform processing other than receiving and sending in the third aspect and the possible implementations of the third aspect.

According to a tenth aspect, a communication apparatus is provided. The communication apparatus may include modules or units that are in a one-to-one correspondence with the method/operations/steps/actions described in the fourth aspect. The modules or units may be implemented by using a hardware circuit, software, or a combination of a hardware circuit and software.

In some implementations, the apparatus includes: a transceiver unit, configured to: receive a discovery request message from a federated learning server, where the discovery request message includes a first analytics identifier; send a discovery response message to the federated learning server when determining that the federated learning server is allowed to obtain, from a client apparatus, a first model corresponding to the first analytics identifier, where the discovery response message includes an identifier of the client apparatus; receive a request message from the federated learning server, where the request message is used to request to confirm whether the client apparatus is allowed to obtain a second model from the federated learning server, the request message includes the first analytics identifier, and the first model is generated by the client apparatus and is used by the federated learning server to generate the second model; and send a response message to the federated learning server when determining that the client apparatus is allowed to obtain the second model from the federated learning server.

The transceiver unit may perform receiving and sending in the fourth aspect and the possible implementations of the fourth aspect. Optionally, the apparatus further includes a processing unit, and the processing unit may perform processing other than the receiving and sending in the fourth aspect and the possible implementations of the fourth aspect.

According to an eleventh aspect, a communication apparatus is provided. The communication apparatus may include modules or units that are in a one-to-one correspondence with the method/operations/steps/actions described in the fifth aspect. The modules or units may be implemented by using a hardware circuit, software, or a combination of a hardware circuit and software.

In some implementations, the apparatus includes: a transceiver unit, configured to: send a discovery request message to a first network element, where the discovery request message includes a first analytics identifier; receive a discovery response message from the first network element, where the discovery response message includes an identifier of a client apparatus; and obtain, from the client apparatus, a first model corresponding to the first analytics identifier; and a processing unit, configured to: generate a second model based on the first model; send a request message to the first network element, where the request message is used to request to confirm whether the client apparatus is allowed to obtain the second model from a federated learning server, and the request message includes the first analytics identifier; and receive a response message from the first network element, where the response message indicates that the client apparatus is allowed to obtain the second model from the federated learning server. The transceiver unit is further configured to send the second model to the client apparatus.

The transceiver unit may perform receiving and sending in the fifth aspect and the possible implementations of the fifth aspect. Optionally, the apparatus further includes the processing unit, and the processing unit may perform processing other than receiving and sending in the fifth aspect and the possible implementations of the fifth aspect.

According to a twelfth aspect, a communication apparatus is provided. The communication apparatus may include modules or units that are in a one-to-one correspondence with the method/operations/steps/actions described in the sixth aspect. The modules or units may be implemented by using a hardware circuit, software, or a combination of a hardware circuit and software.

In some implementations, the apparatus includes: a transceiver unit, configured to: receive a token request message from a federated learning server, where the token request message includes a first analytics identifier, an identifier of the federated learning server, and an identifier of a client apparatus; and send a first token to the federated learning server after determining that a device vendor identifier of the client apparatus is included in a first interoperability indicator corresponding to the first analytics identifier supported by the federated learning server, and that a device vendor identifier of the federated learning server is included in a second interoperability indicator corresponding to the first analytics identifier supported by the client apparatus. A first model is generated by the client apparatus and is used by the federated learning server to generate a second model.

The transceiver unit may perform receiving and sending in the sixth aspect and the possible implementations of the sixth aspect. Optionally, the apparatus further includes the processing unit, and the processing unit may perform processing other than receiving and sending in the sixth aspect and the possible implementations of the sixth aspect.

According to a thirteenth aspect, a communication apparatus is provided, including at least one processor. The at least one processor is configured to execute a computer program or instructions, and/or use a logic circuit, to enable the communication apparatus to perform the method in any one of the first aspect to the sixth aspect or any one of the possible implementations of these aspects.

In some implementations, the at least one processor is coupled to at least one memory, and the at least one memory stores the computer program or the instructions. Optionally, the communication apparatus further includes the at least one memory. Optionally, the at least one processor and the at least one memory are integrated together.

According to a fourteenth aspect, a chip or a chip system is provided, including a processor and a communication interface. The communication interface is configured to: receive to-be-processed information and/or data, and send the to-be-processed information and/or data to the processor. The processor is configured to process the to-be-processed information and/or data, so that a communication apparatus in which the chip is mounted performs the method in any one of the first aspect to the sixth aspect or any one of the possible implementations of these aspects.

According to a fifteenth aspect, a communication system is provided, including the communication apparatus according to the seventh aspect and the eighth aspect, or including the communication apparatus according to the ninth aspect, or including the communication apparatus according to the tenth aspect and the eleventh aspect, or including the communication apparatus according to the twelfth aspect.

Optionally, the communication system further includes a client apparatus.

According to a sixteenth aspect, a computer-readable storage medium is provided. The computer-readable storage medium stores computer instructions. When the computer instructions are run on a computer, the method in any one of the first aspect to the sixth aspect or any one of the possible implementations of these aspects is implemented.

According to a seventeenth aspect, a computer program product is provided. The computer program product includes computer program code. When the computer program code is run on a computer, the method in any one of the first aspect to the sixth aspect or any one of the possible implementations of these aspects is implemented.

For technical effects of the technical solutions in the seventh aspect to the seventeenth aspect, refer to the descriptions of the corresponding technical effects of the first aspect to the seventh aspect. Details are not described again.

### BRIEF DESCRIPTION OF DRAWINGS

FIG. 1 is a diagram of a network architecture applicable to an embodiment of this application;
FIG. 2 is a schematic flowchart in which an authorized server NWDAF requests a client NWDAF to provide a federated learning service;
FIG. 3 is a schematic flowchart in which an authorized server NWDAF requests a client NWDAF to provide a federated learning service;
FIG. 4A and FIG. 4B are a schematic flowchart of a federated learning execution method;
FIG. 5 is a schematic flowchart of a communication method according to an embodiment of this application;
FIG. 6 is a schematic flowchart of another communication method according to an embodiment of this application;
FIG. 7 is a schematic flowchart of still another communication method according to an embodiment of this application;
FIG. 8 is a diagram of a communication apparatus according to an embodiment of this application; and
FIG. 9 is a diagram of another communication apparatus according to an embodiment of this application.

### DESCRIPTION OF EMBODIMENTS

The following describes technical solutions of this application with reference to accompanying drawings.

The technical solutions provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

In a communication system, a part operated by an operator may be referred to as a public land mobile network (public land mobile network, PLMN), which may also be referred to as an operator network or the like. The PLMN is a network established and operated by a government or an operator approved by the government to provide a land mobile communication service for the public, and is mainly a public network in which a mobile network operator (mobile network operator, MNO) provides a mobile broadband access service for a user. The PLMN described in embodiments of this application may be specifically a network compliant with a requirement of the 3rd generation partnership project (3rd generation partnership project, 3GPP) standard, which is referred to as a 3GPP network for short. The 3GPP network generally includes but is not limited to a 5th generation (5th generation, 5G) mobile communication network, a 4th generation (4th generation, 4G) mobile communication network, and another future communication system, for example, a 6th generation (6th generation, 6G) mobile communication network.

For ease of description, the PLMN or the 5G network is used as an example for description in embodiments of this application.

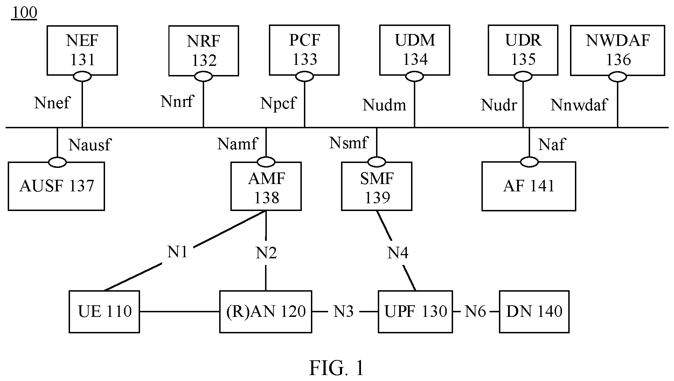

FIG. 1 is a diagram of a network architecture 100. A 5G network architecture based on a service-based architecture (service-based architecture, SBA) in a non-roaming scenario defined in a 3GPP standardization process is used as an example. As shown in FIG. 1, the network architecture may include a terminal device part, a data network (data network, DN) part, and an operator network PLMN part. The operator network PLMN part may include but is not limited to a (radio) access network ((radio) access network, (R)AN) 120 and a core network (core network, CN) part.

The following briefly describes functions of network elements of each part.

The terminal device part may include a terminal device 110. The terminal device 110 is a device that provides voice and/or data connectivity for a user. The terminal device 110 may also be referred to as user equipment UE. The terminal device 110 in this application is a device having a wireless transceiver function, and may communicate with one or more core network (core network, CN) devices through an access network device (which may also be referred to as an access device) in the (radio) access network (R)AN 120. The terminal device 110 may also be referred to as an access terminal, a terminal, a subscriber unit, a subscriber station, a mobile station, a remote station, a remote terminal, a mobile device, a user terminal, a user agent, a user apparatus, or the like. The terminal device 110 may be a cellular phone, a cordless phone, a session initiation protocol (session initiation protocol, SIP) phone, a smartphone, a mobile phone, a wireless local loop (wireless local loop, WLL) station, a personal digital assistant (personal digital assistant, PDA), or the like. Alternatively, the terminal device 110 may be a handheld device having a wireless communication function, a compute device, another device connected to a wireless modem, a vehicle-mounted device, a wearable device, an unmanned aerial vehicle device, a terminal in the internet of things or internet of vehicles, a terminal in any form in a 5G network or a future network, relay user equipment, a terminal in a future evolved 6G network, or the like. The relay user equipment may be, for example, a 5G residential gateway (residential gateway, RG). For example, the terminal device 110 may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in transportation security, a wireless terminal in a smart city, a wireless terminal in a smart home, or the like. The terminal device herein is a 3GPP terminal. A type or a category of the terminal device is not limited in embodiments of this application. For ease of description, in this application, an example in which the UE represents the terminal device is used for description below.

The (R)AN 120 may include one or more access network elements or access network devices. An interface between the access network device and the terminal device may be a Uu interface (or referred to as an air interface, that is, a message exchanged between the access network device and the terminal device may be referred to as an air interface message). In future communication, a name of the interface may remain unchanged, or may be replaced with another name. This is not limited in this application. The (R)AN 120 is a device that provides a wireless communication function for the terminal device 110, is a node or device that may enable the terminal device to access a wireless network, and may also be referred to as a network device. The RAN may be a 3GPP-related cellular system, for example, a 5G mobile communication system, or a future-oriented evolved system (for example, a 6G mobile communication system). The RAN may alternatively be an open radio access network (open RAN, O-RAN or ORAN), a cloud radio access network (cloud radio access network, CRAN), or a wireless fidelity (wireless fidelity, Wi-Fi) system. The (R)AN 120 may be considered as a sub-network of an operator network, and is an implementation system between a service node in the operator network and the terminal device 110. For example, the terminal device 110 may be connected to the service node in the operator network through the (R)AN 120, to obtain a service provided by the service node. The (R)AN 120 includes but is not limited to a next generation node base station (next generation node base station, gNB) in a 5G system, an evolved NodeB (evolved NodeB, eNB) in LTE, a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmitting and receiving point (transmitting and receiving point, TRP), a transmitting point (transmitting point, TP), a small base station device, a mobile switching center, a network device in a future network, or the like. The access network device may alternatively be a module or unit that implements functions of the base station, for example, includes a central unit (central unit, CU) and a distributed unit (distributed unit, DU). A specific technology and a specific device form that are used for the access network device are not limited in embodiments of this application. In systems using different radio access technologies, devices with functions of the access network device may have different names. For ease of description, in all embodiments of this application, the foregoing apparatuses that provide the wireless communication function for the terminal device 110 are collectively referred to as access network devices, or referred to as RANs for short. It should be understood that a specific type of the access network device is not limited in this specification.

In different systems, the CU (including a CU-CP or a CU-UP), the DU, or an RU may have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal device 110 or the (R)AN 120 may be deployed on land, where the deployment includes indoor or outdoor, or handheld or vehicle-mounted deployment; or may be deployed on water (for example, on a ship); or may be deployed in the air (for example, on a plane, a balloon, or a satellite).

The CN part may include but is not limited to the following network functions (network functions, NFs): a user plane function (user plane function, UPF) 130, a network exposure function (network exposure function, NEF) 131, a network function repository function (network function repository function, NRF) 132, a policy control function (policy control function, PCF) 133, a unified data management (unified data management, UDM) function 134, a unified data repository (unified data repository, UDR) function 135, a network data analytics function (network data analytics function, NWDAF) 136, an application function (application function, AF) 141, an authentication server function (authentication server function, AUSF) 137, an access and mobility management function (access and mobility management function, AMF) 138, and a session management function (session management function, SMF) 139.

A data network DN 140 may also be referred to as a packet data network (packet data network, PDN), and is usually a network located outside the operator network, for example, a third-party network.

The following further briefly describes functions of the NFs included in the CN.
1. The UPF 130 is a gateway provided by an operator, and is a gateway for communication between the operator network and the DN 140. The UPF network function 130 include user plane-related functions such as packet routing and transmission, packet inspection, traffic usage reporting, quality of service (quality of service, QoS) handling, lawful interception, uplink packet verification, and downlink packet buffering.
2. The NEF 131 is a control plane function provided by the operator, mainly enables a third party to use a service provided by the network, and supports exposure of capabilities, events, and data analytics by the network, secure provision of information from an external application to the PLMN, translation of internal-external information of the PLMN, and the like.
3. The NRF 132 is a control plane function provided by the operator, and may be configured to maintain real-time information of a network function and a service in the network.
4. The PCF 133 is a control plane function provided by the operator, mainly supports provision of a unified policy framework to govern network behavior and provision of policy rules for control plane network functions, and is responsible for accessing user subscription information relevant for policy decisions. For example, the PCF 133 may be divided into two PCFs having different functions, which are respectively a UE-PCF and an AMF-PCF.
5. The UDM 134 is a control plane function provided by the operator, and is responsible for storage of a subscription permanent identifier (subscription permanent identifier, SUPI) of a subscriber in the operator network, a generic public subscription identifier (generic public subscription identifier, GPSI) of the subscriber, a credential (credential), and other information.
6. The UDR 135 is a control plane function provided by the operator, provides functions of storage and retrieval of subscription data for the UDM, provides functions of storage and retrieval of policy data for the PCF, stores and retrieves NF group ID (group ID) information of a user, and the like.
7. The NWDAF 136 is a control plane function provided by the operator, and has functions such as data collection, model training, data analytics, and model inference. An NWDAF network element including an analytics logical function (analytics logical function, AnLF) may be configured to infer and derive analytics information and expose analytics services. The analysis may indicate statistical information and/or prediction generated or provided based on a request of an analysis consumer (consumer). An NWDAF network element including a model training logical function (model training logical function, MTLF) may be configured to train a machine learning (machine learning, ML) model or an AI model, and expose a new training service, for example, provide the trained AI model or ML model to an AnLF. For a process of obtaining model-related data, the AnLF may serve as a data producer (producer) network element denoted as NFp, and the MTLF may serve as a data consumer network element denoted as NFc.
   Currently, the AnLF may request a model from the MTLF through a model subscription (MLModelProvision_Subscribe) service or message. The model may be obtained by the MTLF through training based on model-related data (for example, referred to as a sample). In addition, the AnLF may specify a data set (data set) by using a data set tag (data set tag), and the data set may include model-related data. Therefore, the data set tag may be used for marking a data set, in other words, marking model-related data. The data set tag may also be understood as a data set index or a data index. The MTLF may serve as a model-related data consumer network element to obtain data stored by a data producer network element in a data repository. The data producer network element may be the AnLF, and the data repository network element may be a network element for storing data, for example, an analytics data repository function (analytics data repository function, ADRF). In this application, related data may be understood as data used for vertical federated learning, for example, input data, training data, inference data, a model parameter, or sample data.
8. The AF 141 is a control plane function provided by the operator, and mainly interacts with other NFs in the PLMN to provide corresponding services such as provision of visited network selection information for roaming UE, traffic routing guidance, and access to the NEF 131.
9. The AUSF 137 is a control plane function provided by the operator, and is usually used for primary authentication, that is, authentication between the terminal device 110 (a subscriber) and the operator network.
10. The AMF 138 is a control plane network function provided by the operator network, and is responsible for access control and mobility management when the terminal device 110 accesses the operator network, for example, including functions such as mobility status management, allocation of a temporary user identity, and user authentication and authorization.
11. The SMF 139 is a control plane network function provided by the operator network, is responsible for managing a protocol data unit (protocol data unit, PDU) session (including session establishment, modification, and release) of the terminal device 110, and is for selection and reselection of a user plane function network element, internet protocol (internet protocol, IP) address allocation of the terminal device, quality of service (quality of service, QoS) control, and the like.

It may be understood that the foregoing network elements or functions may be physical entities in a hardware device, software instances running on dedicated hardware, or virtualized functions instantiated on a sharing platform (for example, a cloud platform). In short, an NF may be implemented by hardware or software.

In FIG. 1, Nnef, Nnrf, Npcf, Nudm, Nudr, Nnwdaf, Naf, Nausf, Namf, Nsmf, N1, N2, N3, N4, and N6 are sequence numbers of interfaces. For example, for meanings of the sequence numbers of the interfaces, refer to meanings defined in the 3GPP standard protocol. The meanings of the sequence numbers of the interfaces are not limited in this application. It should be noted that the names of the interfaces between the network functions in FIG. 1 are merely examples. The interfaces in the system architecture may alternatively have other names. This is not limited in this application. In addition, names of messages (or signaling) transmitted between the foregoing network elements are merely examples, and do not constitute any limitation on functions of the messages.

It should be noted that in the architecture shown in FIG. 1, an interface between the (R)AN and the CN may also be referred to as an NG interface (not shown in the figure), and the (R)AN and the CN are connected through the NG interface. The NG interface may include an NG-C interface and an NG-U interface. The NG-C interface is a control plane interface connecting the (R)AN and the AMF, and is configured to transmit control plane data. The NG-U interface is a user plane interface connecting the (R)AN and the UPF, and is configured to transmit user plane data.

It should be understood that the network architecture 100 is merely a network architecture described from a perspective of the service-based architecture. In the service-based architecture, the PLMN may orderly combine a part or all of network functions based on a specific scenario requirement, to implement customization of a capability and a service of the network, to deploy dedicated networks for different services, that is, implement 5G network slicing (network slicing). With a network slicing technology, the operator can respond to customer requirements more flexibly and quickly and support flexible allocation of network resources.

It should be further understood that the foregoing names are defined merely for distinguishing between different functions, and should not constitute any limitation on this application. This application does not exclude a possibility that another name is used in the 5G network and another future network. For example, in the 6G network, the terms in 5G may still be used for a part or all of the network elements, or other names may be used.

For ease of understanding, the following first describes related terms, concepts, and technologies that may be used in embodiments of this application.

### 1. Federated learning

Federated learning (FL) is a distributed machine learning method in which a plurality of participants exchange model parameters through security mechanisms without exchanging or sharing raw training data, thereby achieving collaborative training. In other words, federated learning is an encrypted distributed machine learning technology. Federated learning can fully utilize data and computational capabilities of the participants, enabling a plurality of parties to collaboratively build general and robust machine learning models without sharing data. Therefore, federated learning can effectively help a plurality of organizations use data and perform learning modeling while meeting user privacy protection, data security, and government regulation requirements. In other words, federated learning is designed to share knowledge and parameters without exchanging any data.

Federated learning includes horizontal federated learning and vertical federated learning. In an increasingly strict data supervision environment, federated learning can resolve key problems such as data ownership, data privacy, data access rights, and heterogeneous data access. A horizontal row of a data matrix indicates a training sample, and a vertical column indicates a data feature. Horizontal federated learning is to perform federated learning by combining a plurality of rows of samples with same features of a plurality of participants, that is, training data of each participant is horizontally divided. Horizontal federated learning is also referred to as feature-aligned federated learning, that is, data features of the participants are aligned. Horizontal federated learning can increase a total quantity of training samples. As a machine learning technology, the VFL may be used to implement model training and inference without participants sharing raw data, making it uniquely applicable to scenarios with high overlap in participant training sample identifications (identifications, IDs) but low overlap in data features. In the VFL, different data features of a common sample of a plurality of participants are combined to perform federated learning, that is, training data of each participant is vertically divided. Therefore, such federated learning is referred to as vertical federated learning. Vertical federated learning is to perform federated learning by combining the different data features of the common sample of the plurality of participants, that is, the training data of each participant is vertically divided. Vertical federated learning is also referred to as sample-aligned federated learning (sample-aligned federated learning), that is, training samples of the participants are aligned, and vertical federated learning can increase a feature dimension of training data.

### 2. Analytics identifier (analytics ID)

The analytics identifier may indicate an analysis business, or referred to as an analysis service, or a service for short. The service is related to a model, that is, the model may be used to execute the service. Alternatively, it is described as below: The analytics identifier is related to the model, that is, the model is used to execute the service corresponding to the analytics identifier.

Alternatively, it may be understood that the MTLF is related to the analytics identifier, that is, a model provided by the MTLF supports execution of the service corresponding to the analytics identifier. For example, the MTLF may be related to one or more analytics identifiers. It may be understood that the MTLF may provide a model of a service corresponding to each of the one or more analytics identifiers. For example, an MTLF1 is related to an analytics identifier 1 and an analytics identifier 2. In other words, the MTLF1 corresponds to the analytics identifier 1 and the analytics identifier 2. In this case, the MTLF1 may provide a model of a service corresponding to the analytics identifier 1 and a model of a service corresponding to the analytics identifier 2.

### 3. Interoperability indicator (interoperability indicator)

For example, the interoperability indicator may correspond to the MTLF, or correspond to an analytics identifier, or correspond to an analytics identifier corresponding to the MTLF. Alternatively, it is described as below: The interoperability indicator is related to the MTLF, or the interoperability indicator is related to the analytics identifier. The interoperability indicator may also be referred to as an interoperability indication, or a machine learning (machine learning, ML) model interoperability indicator, or a model interoperability indicator (ML Model interoperability indicator).

The interoperability indicator includes a vendor list, or is described as a list of NWDAF providers (or suppliers). Vendors in the vendor list are allowed to retrieve or use a model provided by the MTLF. The interoperability indicator also indicates that the MTLF supports the vendor in requesting the model provided by the MTLF from an NWDAF of the vendor in the vendor list. The interoperability indicator also indicates that the vendors in the vendor list are allowed to obtain the model from the MTLF. The interoperability indicator also indicates that the MTLF allows the vendors in the vendor list to obtain the model from the MTLF.

The interoperability indicator is a list of MTLF providers. For example, the interoperability indicator indicates a vendor identifier, or the interoperability indicator is associated with the vendor identifier. The interoperability indicator may be associated with an analytics identifier. For example, the interoperability indicator and the analytics identifier are in a one-to-one correspondence. It indicates that the MTLF allows a corresponding vendor or an MTLF included in the vendor to obtain a model corresponding to the analytics identifier, and/or indicates that the MTLF is allowed to interoperate with the AnLF to obtain the model corresponding to the analytics identifier. Optionally, one MTLF may have one or more interoperability indicators. If one MTLF has a plurality of interoperability indicators, the plurality of interoperability indicators respectively correspond to different analytics identifiers. For example, an MTLF NF ID 1 corresponds to an analytics identifier 1 and an analytics identifier 2, and an MTLF to which the MTLF NF ID 1 belongs has an interoperability indicator 1 and an interoperability indicator 2. The interoperability indicator 1 corresponds to the analytics identifier 1, and the interoperability indicator 2 corresponds to the analytics identifier 2. Optionally, if the MTLF to which the MTLF NF ID 1 belongs and an MTLF to which an MTLF NF ID 2 belongs support interoperability, the MTLF to which the MTLF NF ID 2 belongs may have the interoperability indicator 1 and the interoperability indicator 2. The interoperability indicator 1 corresponds to the analytics identifier 1, and/or the interoperability indicator 2 corresponds to the analytics identifier 2. In other words, MTLFs of the same vendor may have the same interoperability indicator for the same analytics identifier. In addition, if the MTLF to which the MTLF NF ID 1 belongs and the MTLF to which the MTLF NF ID 2 belongs belong to different vendors, the MTLF to which the MTLF NF ID 2 belongs may have an interoperability indicator 3 and an interoperability indicator 4. The interoperability indicator 3 corresponds to the analytics identifier 1, and/or the interoperability indicator 4 corresponds to the analytics identifier 2. In other words, MTLFs of the same vendor may have different interoperability indicators for the same analytics identifier.

For example, the analytics identifier 1 is related to a model 1, that is, the model 1 is used to execute a service corresponding to the analytics identifier 1. The analytics identifier 1 is related to the interoperability indicator 1, that is, the model 1 is related to the interoperability indicator 1. It is assumed that the interoperability indicator 1 includes an identifier of a vendor 1 and an identifier of a vendor 2. In other words, the model 1 can be provided for the vendor 1 and the vendor 2 to use. Alternatively, it may be understood that, if a vendor of an NWDAF is the vendor 1 or the vendor 2, the NWDAF may use the model 1.

For example, one MTLF may have one or more interoperability indicators. If one MTLF has a plurality of interoperability indicators, the plurality of interoperability indicators may correspond to different analytics identifiers. For example, an MTLF1 corresponds to the analytics identifier 1 and the analytics identifier 2, where the interoperability indicator 1 corresponds to the analytics identifier 1, and the interoperability indicator 2 corresponds to the analytics identifier 2.

### 4. Model producer

The model producer is an entity that produces a model, or an entity that has the right to provide model information to other entities based on network configurations. A consumer can obtain a model based on the model information. The model information includes but is not limited to: a uniform resource locator (uniform resource locator, URL) of a model file, a model itself, a model parameter, a model identifier, model address information, or the like.

### 5. Vendor identifier

A vendor identifier (vendor ID) of a vendor (vendor) may also be represented as network element information, and identifies a vendor or a manufacturer of a network element. In this application, the vendor may also be referred to as a device vendor, a supplier, or the like, and is configured to produce or provide a network element. For example, a vendor ID 1 may identify a vendor of an NWDAF network element.

The vendor identifier may identify a device vendor or supplier. One vendor identifier may correspond to one or more NWDAF network element identifiers. For example, both an NWDAF NF ID 1 and an NWDAF NF ID 2 may correspond to the vendor identifier 1. In other words, an MTLF to which the MTLF NF ID 1 belongs and an MTLF to which the MTLF NF ID 2 belongs belong to the same vendor, and a vendor identifier of the vendor is a vendor identifier 1.

The foregoing briefly describes terms in this application. Details are not described again in the following embodiments. In addition, the foregoing descriptions of the terms are merely descriptions for ease of understanding, and do not limit the protection scope of embodiments of this application.

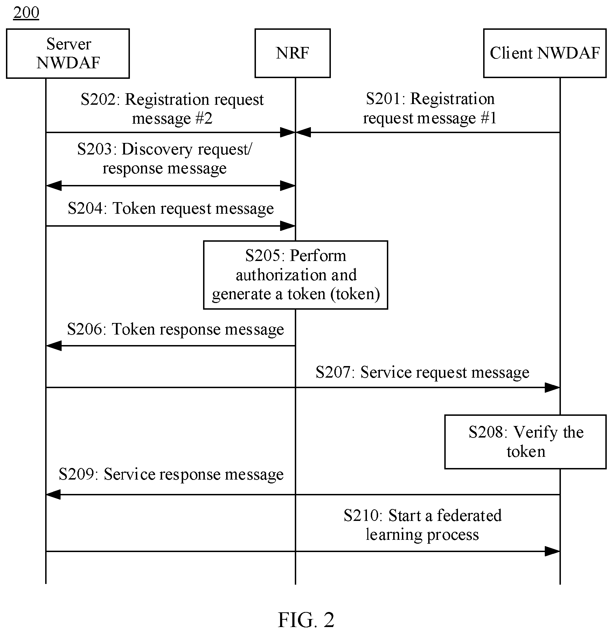

FIG. 2 is a schematic flowchart in which an authorized server NWDAF requests a client NWDAF to provide a federated learning service. As shown in FIG. 2, the following plurality of steps are included. For parts that are not described in detail, refer to an existing protocol.

S201: The client NWDAF sends a registration request message #1 to an NRF.

Correspondingly, the NRF receives the registration request message #1 from the client NWDAF.

The registration request message #1 is used to request to register with a network.

For example, the registration request message #1 may be an Nnrf_NFManagement_NFRegister_request message, and the registration request message #1 includes a configuration parameter (for example, a client NWDAF profile), where the configuration parameter includes one or more of the following: a client NWDAF NF type, an analytics ID(s) (Analytics ID(s)), an interoperability indication corresponding to the analytics ID, address information of the client NWDAF, a service area, FL capability type information (for example, an FL client), or a time interval during which the client NWDAF supports FL.

Optionally, a quantity of client NWDAFs is not limited in this application, for example, there are an NWDAF 1, ..., and an NWDAF N, where N is an integer greater than or equal to 1.

Optionally, the NRF sends a registration response message #1 to the client NWDAF. Correspondingly, the client NWDAF receives the registration response message #1 from the NRF, to indicate that registration of the client NWDAF is completed.

S202: A server NWDAF sends a registration request message #2 to the NRF.

Correspondingly, the NRF receives the registration request message #2 from the server NWDAF.

The registration request message #2 is used to request to register with a network.

For example, the registration request message #2 may be an Nnrf_NFManagement_NFRegister_request message, and the registration request message #2 includes a configuration parameter (for example, a server NWDAF profile), where the configuration parameter includes one or more of the following: a server NWDAF NF type, an analytics ID(s), an interoperability indication corresponding to the analytics ID, address information of the server NWDAF, a service area, FL capability type information (for example, an FL server), or a time interval at which the server NWDAF supports FL.

It should be understood that both the server NWDAF and the client NWDAF are NWDAFs including an MTLF, and may participate in federated learning training.

Further, the NRF stores configuration parameters of the server NWDAF and the client NWDAF.

For example, the NRF stores the server NWDAF profile and the client NWDAF profile.

Optionally, the NRF sends a registration response message #2 to the server NWDAF. Correspondingly, the server NWDAF receives the registration response message #2 from the NRF, to indicate that registration of the server NWDAF is completed.

S203: The server NWDAF and the NRF perform a client NWDAF discovery procedure.

Step 1: The server NWDAF sends a discovery request message to the NRF.

Correspondingly, the NRF receives the discovery request message from the server NWDAF.

For example, the server NWDAF sends the discovery request message to the NRF to discover an available client NWDAF in the network. For example, the server NWDAF invokes an Nnrf_NFDiscovery_Request from a properly configured NRF in the same PLMN, and includes an NF type (for example, Client NWDAF) of an expected NF instance in the Nnrf_NFDiscovery_Request. Optionally, at least one of the following may be further included: an expected service name, an NF type (for example, Server NWDAF) of the server NWDAF, and an expected target NF position. For example, the NRF determines, based on the NF type of the expected NF instance included in the Nnrf_NFDiscovery_Request, whether to allow the server NWDAF to discover the expected NF instance.

Step 2: The NRF sends a discovery response message to the server NWDAF.

Correspondingly, the server NWDAF receives the discovery response message from the NRF.

The discovery response message may include one or more client NWDAFs, for example, a client NWDAF 1, ..., and a client NWDAF N, and the one or more client NWDAFs support FL. For example, the NRF determines a matched NF instance set based on the Nnrf_NFDiscovery_Request and an internal policy of the NRF, and delivers an NF profile of an NF instance, for example, a client NWDAF. For example, the discovery response message may be an Nnrf_NFDiscovery_Response message, and an NF profile of each NF instance may be sent to the server NWDAF through the Nnrf_NFDiscovery_Response message.

Optionally, if the server NWDAF includes the expected target NF position in step S203, the NRF should not restrict a discovered NF instance or a set of NF service instances to the target NF position. For example, if an NF instance or an NF service instance cannot be found for the preferred target NF position, the NRF may provide an NF instance or an NF service instance whose position is not the preferred target NF position.

S204: The server NWDAF sends a token request message to the NRF.

Correspondingly, the NRF receives the token request message from the server NWDAF.

The token request message is used to request to obtain, from the NRF, an authorization token for requesting the federated learning service from the client NWDAF. In other words, the server NWDAF requests the token from the NRF through the token request message, and the token is used to authorize the server NWDAF to request the client NWDAF to provide the FL service corresponding to the analytics ID.

For example, the token request message may be an Nnrf_AccessToken_Get Request message, and the token request message includes at least one of the following: the analytics ID, an NF instance ID of the client NWDAF, an expected client NWDAF service name (for example, an expected NF service name (s), for example, the FL service corresponding to the analytics ID), the expected NF type (for example, the client NWDAF), the NF type of the client NWDAF, and the NF type of the server NWDAF.

Optionally, the token request message may further include an additional scope (namely, a requested resource and a requested operation for a resource), a network slice selection assistance information (single network slice selection assistance information, S-NSSAI) list or an NSI ID list of an expected client NWDAF instance, an NF set ID of the expected client NWDAF instance, and an S-NSSAI list of the NFc.

It should be noted that this implementation is applicable to a case in which the server NWDAF and the client NWDAF belong to the same operator, and is also applicable to a case in which the server NWDAF and the client NWDAF belong to different operators. This is not specifically limited in this application.

S205: The NRF performs authorization and generates the token (token).

For example, that the NRF performs an authorization check on the server NWDAF may include: The NRF verifies an identity of the server NWDAF, and when identity verification succeeds, verifies whether the server NWDAF has permission to access the requested service. The token is generated when the server NWDAF has the permission, that is, a service obtained by the server NWDAF by using the token is an authorized service, to prevent unauthorized use of the service.

That the NRF verifies the identity of the server NWDAF may include: verifying whether a parameter (for example, the NF type (type) of the server NWDAF) included in the token obtaining request matches a public key certificate or NF configuration information of the server NWDAF. If the parameter matches the public key certificate or NF configuration information, identity verification succeeds. If the parameter does not match the public key certificate or NF configuration information, verification fails. That the NRF verifies whether the server NWDAF has the permission to access the requested service may include: The NRF determines, based on a service-related parameter (for example, the expected service name) included in the token obtaining request, the NF type of the server NWDAF, and a local configuration, whether the server NWDAF has the permission to access the requested service. For example, the NRF verifies whether a vendor ID of the server NWDAF is included in the interoperability indicator corresponding to the analytics ID provided by the client NWDAF. If the vendor ID of the server NWDAF is included in the interoperability indicator, verification succeeds. If the vendor ID of the server NWDAF is not included in the interoperability indicator, verification fails.

For example, if the authorization check performed by the NRF succeeds, the NRF generates the token including claims. The claims include at least one of an NF instance ID of an authorizing network element, an NF instance ID of the server NWDAF, the NF type of the client NWDAF, the expected service name, and an expiration time (expires_in). Optionally, the claims may further include at least one of an additional scope (an allowed requested resource and a requested operation for the resource), the S-NSSAI list or the NSI ID list of the expected client NWDAF instance, and the NF set ID of the expected client NWDAF instance.

Optionally, the claims may further include other parameters, for example, an allowed resource, network slice information, "additional scope" information (namely, an allowed resource and an allowed resource operation (service operation)), an NSSAI or NSI ID list of the expected client NWDAF instance, and the NF set ID of the expected client NWDAF instance.

For example, if the NRF does not perform authorization, the NRF rejects generating the token. Optionally, the NRF may send a cause value to the server NWDAF, to indicate that server NWDAF authorization check fails, that is, the server NWDAF cannot request the client NWDAF to execute an FL process.

Optionally, the NRF may perform security protection on the generated token, where the security protection herein may be integrity protection (Integrity protection). For example, the NRF generates a message authentication code MAC for the token by using a shared key, and the NRF may send the MAC and the token together to the server NWDAF. The MAC is used to verify whether information in the token is tampered with. Alternatively, the NRF signs the claims by using a private key, and the client NWDAF may verify, by using the signature, whether the claims are tampered with. For a specific method of protecting the token by using a signature and a MAC value, refer to a definition in RFC 7515.

S206: The NRF sends a token response message to the server NWDAF.

Correspondingly, the server NWDAF receives the token response message from the NRF.

The token response message is used to authorize the server NWDAF to obtain the FL service from the client NWDAF, and the token response message includes the token.

Optionally, the token response message may further include a validity period of the token, and the token usually can be repeatedly used within the validity period.

S207: The server NWDAF sends a service request message to the client NWDAF.

Correspondingly, the client NWDAF receives the service request message from the server NWDAF.

The service request message includes the token and the analytics ID, and the service request message is used to request the client NWDAF to execute the FL service corresponding to the analytics ID. For example, the service request message may be a service request message.

S208: The client NWDAF verifies the token, and determines whether to join federated learning.

For example, the client NWDAF verifies the token, and determines whether to execute the FL service corresponding to the analytics ID. For example, the client NWDAF verifies integrity of the token by verifying the signature by using the public key of the NRF or checking the MAC value by using the shared key. If integrity verification succeeds, the client NWDAF verifies whether the server NWDAF is authorized to obtain the FL service corresponding to the analytics ID. For a specific implementation, refer to an existing protocol.

S209: The client NWDAF sends a service response message to the server NWDAF.

Correspondingly, the server NWDAF receives the service response message from the client NWDAF.

For example, when token verification succeeds, the client NWDAF sends the service response message to the server NWDAF, to indicate that the client NWDAF agrees to execute the FL service corresponding to the analytics ID. For example, the service response message may be a service response message. Optionally, if the client NWDAF fails to verify the token, the client NWDAF may reject providing the FL service. Optionally, the client NWDAF may send a cause value to the server NWDAF, to indicate that token verification fails and execution of the FL service corresponding to the analytics ID is rejected.

S210: The server NWDAF starts the federated learning process.

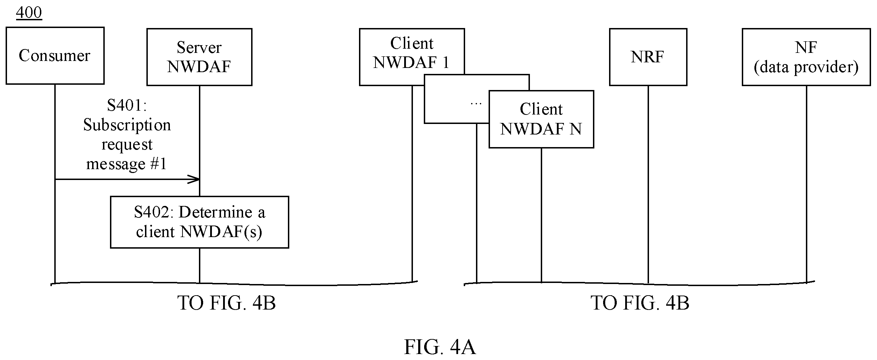

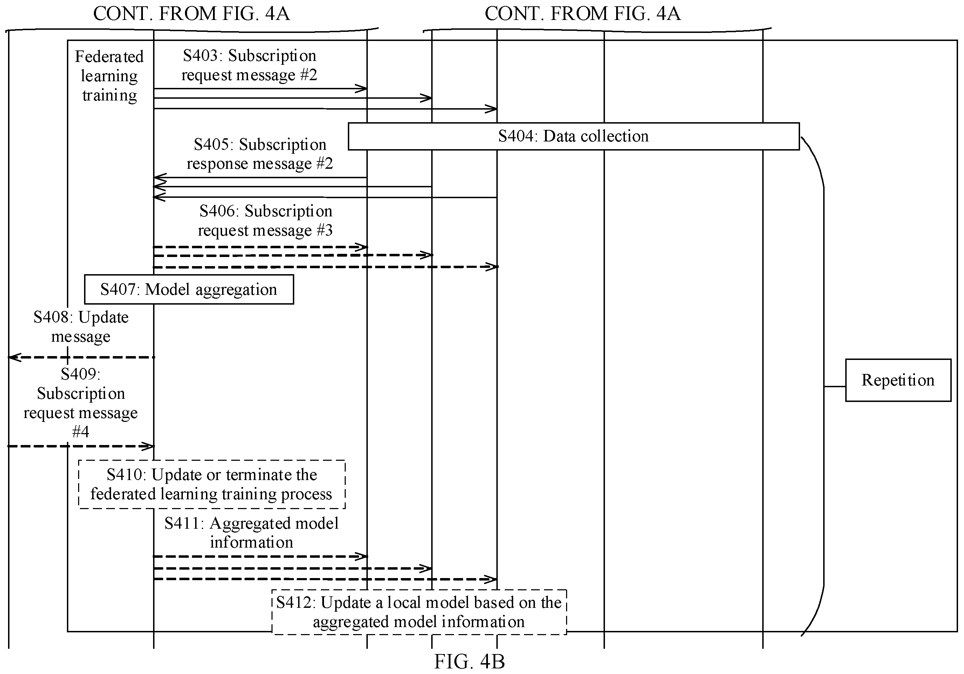

For a specific implementation, refer to a method shown in FIG. 4A and FIG. 4B. Details are not described herein.

In view of this, the server NWDAF and the client NWDAF execute the FL service corresponding to the analytics ID.

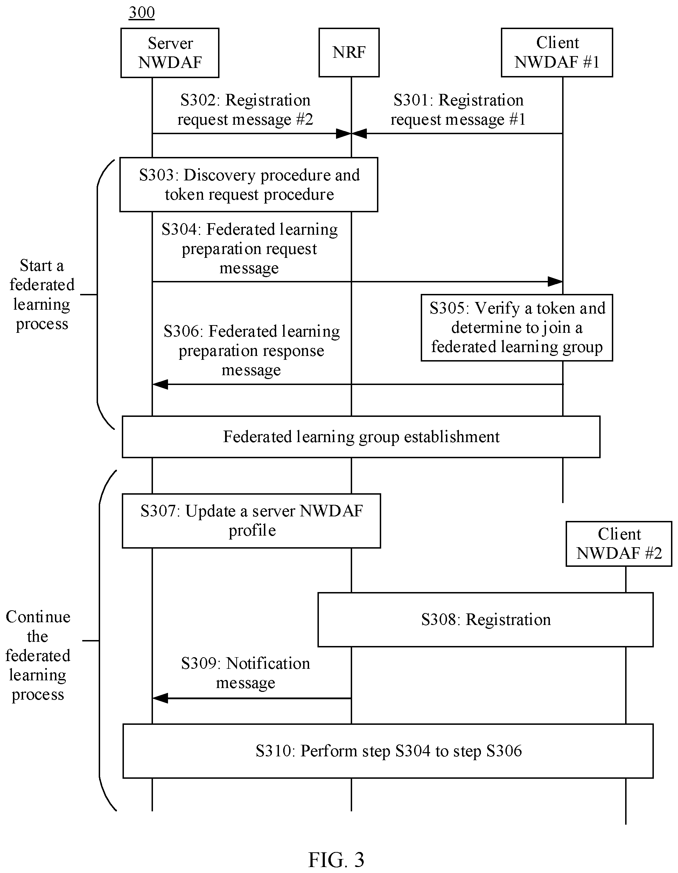

FIG. 3 is a schematic flowchart in which an authorized server NWDAF requests a client NWDAF to provide a federated learning service. As shown in FIG. 3, the following plurality of steps are included. For parts that are not described in detail, refer to an existing protocol.

S301: A client NWDAF #1 sends a registration request message #1 to an NRF.

Correspondingly, the NRF receives the registration request message #1 from the client NWDAF #1.

S302: The server NWDAF sends a registration request message #2 to the NRF.

Correspondingly, the NRF receives the registration request message #2 from the server NWDAF.

It should be understood that both the server NWDAF and the client NWDAF are NWDAFs including an MTLF, and may participate in federated learning training.

Further, the NRF stores configuration parameters of the server NWDAF and the client NWDAF, for example, including one or more of the following: an analytics ID(s), an interoperability ID, a vendor ID, address information, an FL capability type (that is, an FL server or an FL client), a service area, and the like.

S303: The server NWDAF and the NRF perform a client NWDAF discovery procedure and a token request procedure.

It should be understood that the server NWDAF requests a token from the NRF for each selected client NWDAF (for example, the client NWDAF #1 obtained in the discovery procedure), and the token request message includes one or more of the following parameters: the analytics ID, the vendor ID, an FL function, and the like.

For specific implementations of step S201 to step S203, refer to the related descriptions of step S201 to step S206 in the method 200.

S304: The server NWDAF sends a federated learning preparation request message to the client NWDAF #1.

Correspondingly, the client NWDAF #1 receives the federated learning preparation request message from the server NWDAF.

For example, the federated learning preparation request message may be a federated learning preparation request message, and includes the token and the analytics ID. For example, the server NWDAF sends the federated learning preparation request to the FL client NWDAF by using an Nnwdaf_MLModel Training_Subscribe or Nnwdaf_MLModel Training Information_Request service with an ML preparation flag, to check whether the client NWDAF can meet ML model training requirements (for example, the analytics ID, ML model interoperability information), available data requirements (for example, a list of event IDs of local data used for training, and the available data requirements may also include dataset statistics attributes, time windows of data samples, and minimum quantity of data samples), or availability time requirements (for example, a time span required for the FL procedure).

S305: The client NWDAF #1 verifies the token, and determines whether to join a federated learning group to provide an FL service.

For example, the client NWDAF #1 checks whether it can meet the requirements for ML model training, and/or if model information is provided in the federated learning preparation request message in step S304, the client NWDAF #1 further needs to check whether it can successfully download a model, and determines whether to join the federated learning procedure based on an implementation. An example standard used by the client NWDAF #1 may be based on availability, computational and communication capabilities, and ML model interoperability information of the client NWDAF #1.

S306: The client NWDAF #1 sends a federated learning preparation response message to the server NWDAF.

Correspondingly, the server NWDAF receives the federated learning preparation response message from the client NWDAF #1.

For example, the federated learning preparation response message may be a Federated Learning preparation response message. For example, the client NWDAF #1 invokes an Nnwdaf_MLModel training_subscribe response service operation or an Nnwdaf_MLModel training information_request response service operation, to indicate whether to join the federated learning process. If the client NWDAF #1 cannot join the federated learning process, the client NWDAF #1 may include a cause value in the federated learning preparation response message. For example, the cause value may be: The client NWDAF #1 currently cannot support federated learning, or the client NWDAF #1 is currently overloaded.

S307: The server NWDAF updates a server NWDAF profile.

Optionally, if another client NWDAF goes online, for example, a client NWDAF #2 registers with the NRF, the NRF may notify the server NWDAF, and then the server NWDAF requests the client NWDAF #2 to join the federated learning group again to perform the FL service corresponding to the analytics ID. Details are as follows in step S308 to step S310. For a specific implementation, refer to the foregoing related descriptions of the client NWDAF #1.

S308: The client NWDAF #2 performs registration.

S309: The NRF sends a notification message to the server NWDAF, and correspondingly, the server NWDAF receives the notification message from the NRF.

The notification message indicates that the client NWDAF #2 supports the FL service corresponding to the analytics ID.

S310: The server NWDAF and the client NWDAF #2 perform step S304 to step S306 with reference to the descriptions above.

In view of this, a plurality of client NWDAFs participate in providing the FL service corresponding to the analytics ID for the server NWDAF.

For FIG. 1 and FIG. 2, the server NWDAF may start the federated learning process, that is, the server NWDAF and the client NWDAF may perform federated learning training. For a specific process of federated learning training, refer to the related descriptions in FIG. 4A and FIG. 4B.

FIG. 4A and FIG. 4B are a schematic flowchart of a federated learning execution method. As shown in FIG. 4A and FIG. 4B, the following steps are included. For parts that are not described in detail, refer to an existing protocol.

S401: A consumer sends a subscription request message #1 to a server NWDAF.

Correspondingly, the server NWDAF receives the subscription request message #1 from the consumer.

The subscription request message #1 is used to subscribe to ML model provisioning or training. For example, the consumer (for example, an NWDAF including an AnLF or an NWDAF including an MTLF) sends the subscription request message #1, for example, a subscription request for ML model provisioning/training, to the server NWDAF through an Nnwdaf_MLModelProvision service, to retrieve an ML model.

The subscription request message #1 includes one or more of the following: an analytics ID, an ML model metric (for example, ML model accuracy), an accuracy reporting interval, and a predetermined status (an ML model precision threshold or time at which the ML model is required). It should be understood that the ML model precision threshold may indicate target ML model precision in a training process. When the ML model precision threshold is reached in the training process, the server NWDAF may stop the training process. If the consumer provides the time at which the ML model is required, the server NWDAF may consider this information to determine maximum response time of a client NWDAF of the consumer.

S402: The server NWDAF determines a client NWDAF(s).

For a specific implementation, refer to the related descriptions of the method 200 or 300. For example, the client NWDAF(s) determined by the server NWDAF includes a client NWDAF 1,..., and a client NWDAF N.

S403: The server NWDAF sends a subscription request message #2 to the client NWDAF(s).

Correspondingly, the client NWDAF(s) receives the subscription request message #2 from the server NWDAF.

For example, the subscription request message #2 may be Nnwdaf_MLModelTraining_Subscribe. For example, the server NWDAF sends Nnwdaf_MLModelTraining_Subscribe or Nnwdaf_MLModelTrainingInfo_Request to the client NWDAF(s), to request to perform local model training.

The subscription request message #2 includes one or more of the following: initial federated learning parameter provisioning (initial federated learning parameter provisioning), the ML model metric, an initial ML model, or the maximum response time, where the maximum response time is maximum response time for the client NWDAF to report temporary local ML model information to the server NWDAF.

S404: Optionally, the client NWDAF(s) collects data.

For example, if the client NWDAF does not have available local data, each client NWDAF may use a current mechanism in TS 23.288 to collect local data of the client NWDAF from an NF (a data provider).

S405: The client NWDAF(s) sends a subscription response message #2 to the server NWDAF.

Correspondingly, the server NWDAF receives the subscription response message #2 from the client NWDAF(s).

For example, the subscription response message #2 may be Nnwdaf_MLModelTraining_Notify, and is used to report training information of a local model. For example, in the federated learning training process, each client NWDAF trains, based on data of the client NWDAF, the initial ML model provided by the server NWDAF, and reports temporary local ML model information to the server NWDAF in Nnwdaf_MLModelTraing_Notify or Nnwdaf_MLModelTraingInfo_Response.

Optionally, the Nnwdaf_MLModelTraining_Notify or the Nnwdaf_MLModelTrainingInfo_Response may further include a local ML model metric and training input data information (for example, an area covered by a dataset, a sampling ratio, and a maximum/minimum value of values in dimensions of data) calculated by the client NWDAF(s).

Optionally, the ML model is sent from the client NWDAF(s) to the server NWDAF in the federated learning training process, and is information required by the server NWDAF to construct an aggregation model based on a locally trained ML model. If the client NWDAF cannot complete training of the temporary local ML model within the maximum response time provided by the server NWDAF, the client NWDAF(s) may send a delay event notification, including a delay event indication, an optional cause code (for example, a local ML model training failure, or more time required for local ML model training), and expected time for completing training that is available to the client NWDAF before the maximum response time elapses.

S406: Optionally, the server NWDAF sends a subscription request message #3 to the client NWDAF(s).

Correspondingly, the client NWDAF(s) receives the subscription request message #3 from the server NWDAF.

For example, the subscription response message #3 may be Nnwdaf_MLModelTraining_Notify, including extended response time (Extended response time) and/or a current iteration round ID (current iteration round ID). For example, if the server NWDAF receives a notification/response from the client NWDAF(s) that training cannot be completed within the maximum response time, the server NWDAF may send extended maximum response time_MLModel TrainingInfo_Request to the client NWDAF in Nnwdaf_MLModelTraining_Subscribe or Nnwdaf, and before the request, the client NWDAF needs to report the temporary local ML model information to the server NWDAF. Otherwise, the server NWDAF may indicate the client NWDAF to skip reporting of this iteration. The client NWDAF includes the current iteration round ID in the request message to indicate that the request is used to modify training parameters of a current iteration round.

Optionally, the server NWDAF may notify, by sending a termination request, the client NWDAF to stop ML model training and report a current local ML model update.

S407: The client NWDAF performs model aggregation.

For example, the client NWDAF aggregates all the local ML model information retrieved in step S405 to update a global ML model. Optionally, the server NWDAF may further calculate a global ML model metric, for example, based on the local ML model metric, or by applying a global model (if available) on a verification dataset. Each time the client NWDAF provides updated local ML model information, the server NWDAF may update the global ML model, or the server NWDAF may determine to wait for local ML model information from all client NWDAFs before updating the global ML model.

If the server NWDAF provides the maximum response time for the client NWDAF to provide the temporary local ML model information in step S403, or provides the extended maximum response time in step S406, the server NWDAF determines to wait for a client NWDAF that has not provided temporary local ML model of the client NWDAF within the (extended) maximum response time, or only aggregates retrieved local ML model information instances to update the global ML model. The server NWDAF makes a decision based on the notification/response from the client NWDAF, or based on a local configuration if no notification is received.

S408: Optionally, the client NWDAF sends an update message to the consumer.

Correspondingly, the consumer receives the update message from the client NWDAF.

The update message indicates a current ML training status to the consumer. For example, in response to step S401, the client NWDAF sends an Nnwdaf_MLModelProvision_Notify message to the consumer, to dynamically update the global ML model metric to the consumer periodically (for example, after a specific quantity of training rounds or every 10 minutes), or when a specific predetermined state is reached (for example, when the ML model accuracy threshold is reached or training time expires).

S409: Optionally, the consumer sends a subscription request message #4 to the server NWDAF.

Correspondingly, the server NWDAF receives the subscription request message #4 from the consumer. The subscription request message #4 is used to modify the subscription for update or termination.

For example, the consumer determines whether a current model can meet a requirement, for example, the global ML model metric is satisfactory to the consumer, and determines to stop or continue the training process. The user may invoke the Nnwdaf_MLModelProvision_Subscribe service operation used in step S401 again to stop or continue the training process.

S410: Optionally, the server NWDAF updates or terminates the federated learning training process.

For example, the server NWDAF updates or terminates the current federated learning training process based on the subscription request message #4 sent by the consumer in step S409. Optionally, if the server NWDAF receives a request for stopping the federated training process in step S409, the following step S411 and step S412 are skipped.

S411: Optionally, the server NWDAF sends aggregated model information to the client NWDAF(s).

Correspondingly, the client NWDAF(s) receives the aggregated model information from the server NWDAF.

In other words, if the federated learning training process continues, the server NWDAF determines a client NWDAF and sends Nnwdaf_MLModelTraingInfo_Request including the aggregated ML model information to the selected client NWDAF(s) for a next round of federated training.

S412: Optionally, the client NWDAF(s) updates the local model based on the aggregated model information.

For example, each client NWDAF updates a local ML model of the client NWDAF based on the aggregated ML model information distributed by the server NWDAF in step S411.

It should be noted that the foregoing step S404 to step S412 are repeated until a training termination condition (for example, a maximum quantity of iterations, or a result of a loss function being lower than a threshold) is met.

When the federated training process is completed, the server NWDAF requests the client NWDAF(s) to terminate the federated learning training process. In an implementation, the server NWDAF invokes an Nnwdaf_MLModelTraing_Unsubscribe service, with a cause code indicating that the federated learning process has been completed, and may optionally use final aggregated ML model information. Then, the client NWDAF(s) terminate local model training, and if the final aggregated ML model information is received from the server NWDAF, the client NWDAF(s) may store the aggregated ML model information for further use.

As a machine learning technology in a core network, federated learning FL supports a plurality of participants (for example, the server NWDAF and the client NWDAF) in performing local training and exchanging the model parameters through security mechanisms without exchanging training data, thereby achieving collaborative training. For example, during the federated learning process, the client NWDAF may train the local model based on the local data, and send information about the local model to the server NWDAF. The server NWDAF aggregates local models obtained from the plurality of client NWDAFs, and then delivers aggregated model information to each client NWDAF participating in federated learning, to continue training the model based on the local data. This process is repeated until federated learning is completed and the global model is obtained. In this case, the server NWDAF may send the global model generated through federated learning to the client NWDAF, and the client NWDAF may store information about the global model for further use.

However, the applicant finds that in the current procedure, only permission of the server NWDAF to obtain the model from the client NWDAF is checked, for example, step S205 in the method 200 and step S303 in the method 300, to ensure information security on a client NWDAF side. However, particularity of a federated learning scenario is ignored. In other words, the server NWDAF may obtain the model from the client NWDAF, and may send the initial model and/or the global model generated through federated learning to the client NWDAF. Some client NWDAFs support participation in federated learning, and allow the server NWDAF to obtain the model from the client NWDAF, but do not have permission to obtain the global model from the server NWDAF. In this case, if the server NWDAF directly sends the global model to the client NWDAF, leakage of the global model is caused, and a security problem like loss of model property rights and assets is caused.

In view of this, this application provides a secure communication method and a communication apparatus. In a process of obtaining a first token, a first network element determines that a federated learning server (for example, a server NWDAF) is allowed to obtain, from a client apparatus (for example, a client NWDAF), a first model corresponding to a first analytics identifier, and determines that the client apparatus is allowed to obtain a second model from the federated learning server, to cope with a special scenario of federated learning. In this way, the federated learning server sends the second model to the client apparatus when the client apparatus is allowed to obtain the second model from the federated learning server, thereby avoiding model leakage and reducing potential security risks.

For ease of understanding the foregoing embodiments provided in this application, the following descriptions are provided.

First, in this application, unless otherwise stated or if there is a logic conflict, terms and/or descriptions in different embodiments are consistent and may be mutually referenced, and technical features in different embodiments may be combined into a new embodiment based on an internal logical relationship thereof.

Second, in this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" usually indicates an "or" relationship between associated objects. "At least one of the following items (pieces)" or a similar expression thereof indicates any combination of these items, including any combination of singular items (pieces) or plural items (pieces). For example, at least one of a, b, and c may indicate a, b, c, a and b, a and c, b and c, or a, b, and c. Each of a, b, and c may be in a singular form or a plural form.

Third, in this application, "first", "second", and various numerical numbers (for example, #1 and #2) are merely for distinguishing for ease of description, and are not intended to limit the scope of embodiments of this application, for example, are used to distinguish between different messages but not to describe a specific order or sequence. It should be understood that objects described in such a way are interchangeable in an appropriate circumstance, so that a solution other than embodiments of this application can be described.

Fourth, in this application, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

Fifth, in this application, "indicating" may include direct indicating and indirect indicating. When a piece of indication information indicates A, the indication information may directly indicate A or indirectly indicate A, but this does not mean that the indication information necessarily carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of the sub-information may be the same or may be different. A specific sending method is not limited in this application.

The "indication information" in embodiments of this application may be an explicit indication, to be specific, a direct indication by using signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

Sixth, in this application, a "protocol" may be a standard protocol in the communication field, for example, may include a 5G protocol, an NR protocol, and a related protocol used in a future communication system. This is not limited in this application. "Predefinition" may include advance definition, for example, definition in a protocol. "Preconfiguration" may be implemented by pre-storing corresponding code or a corresponding table in a device, or may be implemented in another manner of indicating related information. A specific implementation thereof is not limited in this application.

Seventh, in this application, "storage" may mean storage in one or more memories. The one or more memories may be separately disposed, or may be integrated into an encoder or a decoder, a processor, or a communication apparatus. Alternatively, a part of the one or more memories may be separately disposed, and a part of the one or more memories may be integrated into the decoder, the processor, or the communication apparatus. A type of the memory may be a storage medium in any form. This is not limited in this application.

Eighth, in this application, "communication" may also be described as "data transmission", "information transmission", "data processing", or the like. "Transmission" includes "sending" and "receiving".

Ninth, in this application, "configuration" may indicate signaling configuration, or may be described as configuration signaling. For example, the signaling configuration may be configured by a network device by sending signaling. The signaling may be a radio resource control (radio resource control, RRC) message, downlink control information (downlink control information, DCI), or a system information block (system information block, SIB). For another example, the signaling configuration may be preconfigured. The preconfiguration herein is to define or configure a value of a corresponding parameter in advance in a manner of a protocol, and may be stored in a device during communication. This is not limited in this application.

Tenth, in this application, a "model" may include an "initial model or a basic model", a "first model", and a "second model". The "initial model" indicates a model that is sent by a federated learning server to a client apparatus before a federated learning process, for the client to perform federated learning training. The "first model" indicates a local model that is obtained (or generated) by a client server by training an initialization model based on local data in the federated learning process, and the client apparatus sends information about the first model (including but not limited to data that the client apparatus is not allowed to share with others due to reasons such as data privacy, data security, or data access permission) to the federated learning server. The "second model" indicates a global model obtained by the federated learning server by aggregating first models reported by a plurality of client apparatuses, an initial model, or a basic model. Optionally, the second model may be further provided for the client for repeated training iteration. In other words, the federated learning server delivers information about the aggregated global model to each client apparatus, to facilitate next-round federated learning training. In this application, the first model is generated by the client apparatus and is used by the federated learning server to generate the second model; and/or the second model is provided by the federated learning server and is used to generate the first model.

In this application, the "model" may be replaced with "model information", where the "model information" may include one or more of the following: a model parameter, a model ID, address information (for example, an IP address) of the model, a structure of the model, or the like. Therefore, interaction between the federated learning server and the client apparatus in embodiments of this application for the model may be understood as interaction for the model parameter, the model ID, the address information of the model, or the structure of the model.

The following describes in detail the secure communication method provided in embodiments of this application with reference to the accompanying drawings. Embodiments provided in this application are applicable to the communication system shown in FIG. 1. For example, embodiments of this application may be performed by a first network element (for example, an NRF), a federated learning server (for example, a server NWDAF), or a client apparatus (for example, a client NWDAF), or may be performed by a chip or a circuit of the first network element, the federated learning server, or the client apparatus, or may be implemented by a logical module or software that can implement all or some functions of a communication apparatus. This is not limited in this application.

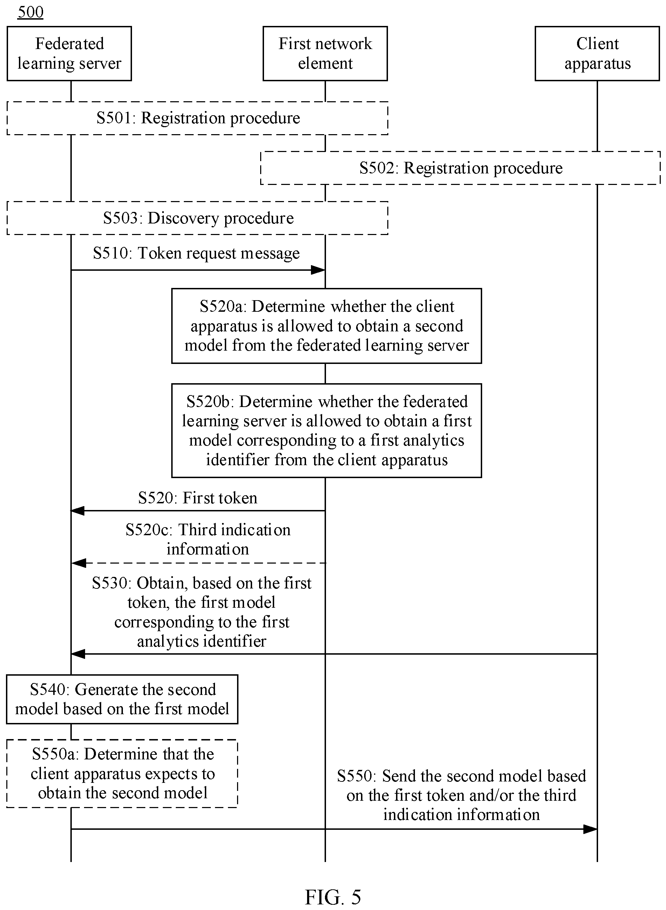

FIG. 5 is a schematic flowchart of a communication method 500 according to an embodiment of this application. As shown in FIG. 5, a first network element, a federated learning server, or a client apparatus is used as an execution body to perform interaction. The method includes one or more of the following steps. For parts that are not described in detail, refer to an existing protocol.

S510: The federated learning server sends a token request message to the first network element.

Correspondingly, the first network element receives the token request message from the federated learning server.

In this application, the first network element may be an NRF, an NEF, or another network entity. For example, the first network element supports permission check or authorization on the federated learning server and/or the client apparatus. Further, the first network element may further support registration of the federated learning server and/or the client apparatus, and the like. Therefore, the first network element may also be referred to as a registration function network element, an authorization function network element, a storage function network element, or the like.

In this application, the federated learning server may be a server NWDAF, namely, a server NWDAF including an MTLF, which is an NWDAF having a capability of the federated learning server. For example, the federated learning server supports at least one of the following: discovering client apparatuses; requesting the client apparatuses to perform local model training and report information about local models, which is specifically: sending a basic model or an initial model to the client apparatuses, to request the client apparatuses to train the basic model or the initial model based on local data to obtain the local models, and reporting the information about the local models; aggregating the information about the local models from the client apparatuses and generating a global model; aggregating information about the model obtained after the basic model is trained from the client apparatuses and generating the global model; and returning the global model to the client apparatuses, to implement iterative training.

In this application, the client apparatus may be replaced with a federated learning client, and the client apparatus may be a client NWDAF, namely, a client NWDAF including an MTLF, which is an NWDAF having a capability of the federated learning client. For example, the client apparatus supports at least one of the following: performing federated learning training based on available local data to generate information about a local model, which is specifically: receiving information about a basic model or an initial model sent by the federated learning server, and training the basic model or the initial model based on the available local data, to generate the information about the local model; reporting the information about the trained local model to the federated learning server; reporting information about the trained basic model to the federated learning server; and receiving information about a global model from the federated learning server, and repeating a training iteration.

It should be noted that federated learning in this application may include at least one of the following: network performance analysis, artificial intelligence (Artificial Intelligence, AI) model training, network quality of service analysis, network abnormal behavior detection, facial recognition, cross-organization medical data analysis and disease prediction, or the like.

For example, the token request message may be an Nnrf_AccessToken_Get Request message, and the token request message is used to request to obtain a token (for example, a first token). The token request message sent by the federated learning server includes a first analytics identifier (an analytics ID), an identifier of the federated learning server, and an identifier of the client apparatus. A specific explanation is described below.

### (1) First analytics identifier

For example, the first analytics identifier may indicate a specific function or service, and the specific function or service is related to a model. In other words, the model may be used to perform the specific function or service, or the model supports performing the specific function or service corresponding to the first analytics identifier. The specific function or service may be facial recognition, network performance analysis, or the like.

### (2) Identifier of the federated learning server

For example, the identifier of the federated learning server may be an ID of the federated learning server, an NF instance ID of the federated learning server (for example, an NF Instance Id(s) of an NF service consumer), an NF instance ID of a network element having a function of the federated learning server or supporting the function of the federated learning server (for example, an NF Instance Id(s) of an NWDAF), address information of the federated learning server, or other information that can identify the federated learning server.

### (3) Identifier of the client apparatus

For example, the identifier of the client apparatus may be an ID of the client apparatus, an NF instance ID of the client apparatus (for example, an NF Instance Id(s) of an NF producer consumer), an NF instance ID of a network element having a function of the federated learning client or supporting the function of the federated learning client (for example, an NF Instance Id(s) of an NWDAF), address information of the client apparatus, or other information that can identify the client apparatus.

Optionally, the token request message may further include one or more of the following: a name of a first service (service name), an NF type of the client apparatus, an NF type of the federated learning server, a device vendor identifier of the client apparatus, a device vendor identifier of the federated learning server, a first interoperability indicator corresponding to the first analytics identifier supported by the federated learning server, a second interoperability indicator corresponding to the first analytics identifier supported by the client apparatus, a federated learning capability type (FL capability type), an additional scope (namely, a requested resource and a requested operation on the resource), or the like.

It should be understood that a parameter related to the client apparatus and included in the token request message may be obtained through a discovery procedure (for example, the federated learning server discovers the client apparatus through the first network element), to obtain configuration information associated with the client apparatus. The configuration information of the client apparatus includes the first analytics identifier, the federated learning capability type, and/or the like. For a specific implementation of the discovery procedure, refer to the following descriptions. Details are not described herein. Alternatively, the parameter related to the client apparatus may be obtained from a third party, for example, may be preconfigured in the federated learning server by a network management system.

The name of the first service may be an Nnwdaf_MLModelTraining service, for example, Nnwdaf_MLModelTraining_Subscribe. The first interoperability indicator is used by the first network element to determine, in the following step S502a, that the client apparatus is allowed to obtain a second model from the federated learning server. The second interoperability indicator is used by the first network element to determine, in the following step S502b, that the federated learning server is allowed to obtain a first model corresponding to the first analytics identifier from the client apparatus, to further generate the first token and send the first token to the federated learning server. The federated learning capability type may be an FL client or an FL server.

Optionally, the first network element may determine, based on one or more of parameters (for example, the identifier of the federated learning server, the identifier of the client apparatus, and the analytics identifier) in the token request message, one or more of the following: the device vendor identifier of the client apparatus, the device vendor identifier of the federated learning server, the second interoperability indicator corresponding to the first analytics identifier supported by the client apparatus, and the second interoperability indicator corresponding to the first analytics identifier supported by the federated learning server. Specifically, the first network element determines an NF profile of the federated learning server based on the identifier of the federated learning server. The NF profile includes the device vendor identifier of the federated learning server and the second interoperability indicator corresponding to the first analytics identifier supported by the federated learning server. The first network element determines an NF profile of the client apparatus based on the identifier of the client apparatus. The NF profile includes the device vendor identifier of the client apparatus and the second interoperability indicator corresponding to the first analytics identifier supported by the client apparatus.

S520: The first network element sends the first token to the federated learning server after determining that the federated learning server is allowed to obtain, from the client apparatus, the first model corresponding to the first analytics identifier, and that the client apparatus is allowed to obtain the second model from the federated learning server.

Correspondingly, the federated learning server receives the first token from the first network element.

The first token may indicate that the client apparatus is allowed to obtain the second model from the federated learning server.

It should be understood that, in this case, the first token indicates that the federated learning server is allowed to obtain, from the client apparatus, the first model corresponding to the first analytics identifier, and also indicates that the client apparatus is allowed to obtain the second model from the federated learning server.

In an implementation, before the first network element sends the first token to the federated learning server, the method 500 may further include the following step S520a and step S520b.

S520a: The first network element determines whether the client apparatus is allowed to obtain the second model from the federated learning server.

In a first example, the first network element determines whether the device vendor identifier of the client apparatus is included in the first interoperability indicator corresponding to the first analytics identifier supported by the federated learning server, or in other words, the first network element determines whether the first interoperability indicator corresponding to the first analytics identifier supported by the federated learning server includes the device vendor identifier of the client apparatus.

In this application, the device vendor identifier (vendor ID) may be replaced with a vendor identifier, a supplier identifier, a provider identifier, a device vendor identifier, or the like, and identifies a device vendor, where the device vendor is configured to provide (or produce) a client apparatus. It should be understood that one device vendor may correspond to one or more network elements (for example, an NWDAF including an MTLF). Alternatively, the device vendor may be replaced with a network element produced by the device vendor, a device produced by the device vendor, a network element corresponding to the device vendor, or the like.

In this application, the first interoperability indicator may include a device vendor identifier list. A device vendor in the device vendor identifier list is allowed to obtain a model from the federated learning server, or the device vendor in the device vendor identifier list is allowed to retrieve or use the model provided by the federated learning server, or the device vendor in the device vendor identifier list can obtain the model from the federated learning server, or the device vendor in the device vendor identifier list has permission to obtain the model from the federated learning server, or the device vendor in the device vendor identifier list can retrieve or use the model provided by the federated learning server, or the device vendor in the device vendor identifier list can support or have permission of a federated learning service (namely, the first service) corresponding to an analytics ID, or the device vendor in the device vendor identifier list can obtain the federated learning service corresponding to the analytics ID, or the device vendor in the device vendor identifier list has permission to use the federated learning service provided by the federated learning server. The first interoperability indicator also indicates that the federated learning server supports the device vendor in requesting, for the client apparatus corresponding to the device vendor in the device vendor identifier list, the model provided by the federated learning server.

In this application, that the device vendor is allowed to..., the device vendor has permission to use..., or the like may be understood as that a network element or device produced by the device vendor is allowed to..., or the network element or device produced by the device vendor has permission to use...

For example, if the device vendor identifier of the client apparatus is included in the first interoperability indicator corresponding to the first analytics identifier supported by the federated learning server, or in other words, the first interoperability indicator corresponding to the first analytics identifier supported by the federated learning server includes the device vendor identifier of the client apparatus, the first network element may determine that the client apparatus is allowed to obtain the second model from the federated learning server.

For example, if the device vendor identifier of the client apparatus is not included in the first interoperability indicator corresponding to the first analytics identifier supported by the federated learning server, or in other words, the first interoperability indicator corresponding to the first analytics identifier supported by the federated learning server does not include the device vendor identifier of the client apparatus, the first network element may determine that the client apparatus is not allowed to obtain the second model from the federated learning server.

In other words, that the first network element determines that the client apparatus can obtain the second model from the federated learning server may be specifically: determining that the device vendor identifier of the client apparatus is included in the device vendor identifier list supported by the federated learning server. On the contrary, that the first network element determines that the client apparatus cannot obtain the second model from the federated learning server may be specifically: determining that the device vendor identifier of the client apparatus is not included in the device vendor identifier list supported by the federated learning server. Through the foregoing determining action, the second model is sent to a client apparatus having model obtaining permission, that is, the second model is not sent to a client apparatus that does not have the model obtaining permission, thereby reducing security risks such as model information leakage, a model resource loss increase, and the like.

In a second example, the first network element determines whether the second interoperability indicator corresponding to the first analytics identifier supported by the client apparatus is included in the first interoperability indicator corresponding to the first analytics identifier supported by the federated learning server, or in other words, the first network element determines whether the first interoperability indicator corresponding to the first analytics identifier supported by the federated learning server includes the second interoperability indicator corresponding to the first analytics identifier supported by the client apparatus.

In other words, that the first network element determines that the client apparatus can obtain the second model from the federated learning server may be specifically: determining that a device vendor identifier list corresponding to the first analytics ID supported by the client apparatus is included in the device vendor identifier list supported by the federated learning server. On the contrary, that the first network element determines that the client apparatus cannot obtain the second model from the federated learning server may be specifically: determining that the device vendor identifier list corresponding to the first analytics ID supported by the client apparatus is not included in the device vendor identifier list supported by the federated learning server. Through the foregoing determining action, the second model is sent to a client apparatus having the model obtaining permission, thereby reducing security risks such as model information leakage, model resource loss, and the like. In addition, the client apparatus does not leak the second model to another consumer who does not have the model obtaining permission, thereby ensuring model asset security in a dual manner.

In a third example, the first network element determines whether the device vendor identifier of the client apparatus is included in the first interoperability indicator corresponding to the first analytics identifier supported by the federated learning server, and/or determines whether the second interoperability indicator corresponding to the first analytics identifier supported by the client apparatus is included in the first interoperability indicator corresponding to the first analytics identifier supported by the federated learning server.

In other words, that the first network element determines that the client apparatus can obtain the second model from the federated learning server may be specifically: determining that the device vendor identifier of the client apparatus is included in the device vendor identifier list supported by the federated learning server, and/or determining that the device vendor identifier list corresponding to the first analytics ID supported by the client apparatus is included in the device vendor identifier list supported by the federated learning server. On the contrary, that the first network element determines that the client apparatus cannot obtain the second model from the federated learning server may be specifically: determining that the device vendor identifier of the client apparatus is not included in the device vendor identifier list supported by the federated learning server, and/or determining that the device vendor identifier list corresponding to the first analytics ID supported by the client apparatus is not included in the device vendor identifier list supported by the federated learning server. Through the foregoing determining action, the second model is sent to a client apparatus having the model obtaining permission, thereby reducing security risks such as model information leakage, model resource loss, and the like. In addition, the client apparatus does not leak the second model to another consumer who does not have the model obtaining permission, thereby ensuring model asset security in a dual manner.

S520b: The first network element determines whether the federated learning server is allowed to obtain the first model corresponding to the first analytics identifier from the client apparatus.

In a first example, the first network element determines that the device vendor identifier of the federated learning server is included in the second interoperability indicator corresponding to the first analytics identifier supported by the client apparatus. In other words, the first network element determines that the second interoperability indicator corresponding to the first analytics identifier supported by the client apparatus includes the device vendor identifier of the federated learning server.

In this application, the second interoperability indicator may include a device vendor identifier list. A device vendor in the device vendor identifier list is allowed to obtain a model from the client apparatus, or the device vendor in the device vendor identifier list is allowed to retrieve or use the model provided by the client apparatus, or the device vendor in the device vendor identifier list can obtain the model from the client apparatus, or the device vendor in the device vendor identifier list has permission to obtain the model from the client apparatus, or the device vendor in the device vendor identifier list can retrieve or use the model provided by the client apparatus, or the device vendor in the device vendor identifier list can support or have permission of a federated learning service (namely, the first service) corresponding to an analytics ID, or the device vendor in the device vendor identifier list can obtain the federated learning service corresponding to the analytics ID, or the device vendor in the device vendor identifier list has permission to use the federated learning service provided by the federated learning server. The second interoperability indicator also indicates that the client apparatus supports the device vendor in requesting, from a federated learning server corresponding to the device vendor in the device vendor identifier list, the model provided by the client apparatus.

In this application, that the device vendor is allowed, the device vendor has ..., or the like may be understood as that a network element or device produced by the device vendor is allowed.

For example, if the device vendor identifier of the federated learning server is included in the first interoperability indicator corresponding to the first analytics identifier supported by the client apparatus, or in other words, the first interoperability indicator corresponding to the first analytics identifier supported by the client apparatus includes the device vendor identifier of the federated learning server, the first network element may determine that the federated learning server is allowed to obtain, from the client apparatus, the first model corresponding to the first analytics identifier.

For example, if the device vendor identifier of the federated learning server is not included in the first interoperability indicator corresponding to the first analytics identifier supported by the client apparatus, or in other words, the first interoperability indicator corresponding to the first analytics identifier supported by the client apparatus does not include the device vendor identifier of the federated learning server, the first network element may determine that the federated learning server is not allowed to obtain, from the client apparatus, the first model corresponding to the first analytics identifier.

In other words, that the first network element determines that the federated learning server is allowed to obtain, from the client apparatus, the first model corresponding to the first analytics identifier may be specifically: determining that the device vendor identifier of the federated learning server is included in the device vendor identifier list supported by the client apparatus. On the contrary, that the first network element determines that the federated learning server is not allowed to obtain, from the client apparatus, the first model corresponding to the first analytics identifier may be specifically: The first network element determines that the device vendor identifier of the federated learning server is not included in the device vendor identifier list supported by the client apparatus. Through the foregoing determining action, the first model is sent to a federated learning server having model obtaining permission, that is, the first model is not sent to another consumer that does not have the model obtaining permission, thereby reducing security risks such as model information leakage, a model resource loss increase, and the like.

In a second example, the first network element determines that the first interoperability indicator corresponding to the first analytics identifier supported by the federated learning server is included in the second interoperability indicator corresponding to the first analytics identifier supported by the client apparatus, or in other words, the first network element determines that the second interoperability indicator corresponding to the first analytics identifier supported by the client apparatus includes the first interoperability indicator of the federated learning server.

In other words, that the first network element determines that the federated learning server is allowed to obtain, from the client apparatus, the first model corresponding to the first analytics identifier may be specifically: determining that the federated learning server is allowed to obtain, from the client apparatus, the first model corresponding to the first analytics identifier, and may be specifically: determining that the device vendor identifier list supported by the client apparatus is included in the device vendor identifier list supported by the federated learning server. On the contrary, that the first network element determines that the federated learning server is not allowed to obtain, from the client apparatus, the first model corresponding to the first analytics identifier may be specifically: determining that the device vendor identifier list supported by the client apparatus is not included in the device vendor identifier list supported by the federated learning server. Through the foregoing determining action, the first model is sent to a federated learning server having the model obtaining permission, thereby reducing security risks such as model information leakage, model resource loss, and the like. In addition, the federated learning server does not leak the first model to another consumer who does not have the model obtaining permission, thereby ensuring model asset security in a dual manner.

Therefore, based on the foregoing step S520a and step S520b, that the first network element determines that the client apparatus is allowed to obtain the second model from the federated learning server includes but is not limited to the foregoing two examples, and that the first network element determines that the federated learning server is allowed to obtain, from the client apparatus, the first model corresponding to the first analytics identifier includes but is not limited to the foregoing two examples. It should be understood that the foregoing implementations are merely examples provided for ease of understanding, and other implementations are not excluded. The plurality of examples may be implemented independently or in combination. A combination manner thereof is not limited in this application. For example, the first network element may determine, by using the first example of step S520a and the second example of step S520b, that the client apparatus and the federated learning server have permission to obtain a model from each other. For another example, the first network element may determine, by using the second example of step S520a and the first example of step S520b, that the client apparatus and the federated learning server have permission to obtain a model from each other. For another example, the first network element may determine, by using the first example and the second example of step S520a and the first example of step S520b, that the client apparatus and the federated learning server have permission to obtain a model from each other.

It should be noted that an execution sequence of step S520a and step S520b is not specifically limited in this application.

The following describes, by using an example, a trigger condition for the first network element to determine that the client apparatus is allowed to obtain the second model from the federated learning server.
(1) The first network element determines, based on the identifier of the federated learning server and/or the identifier of the client apparatus, that the federated learning server and/or the client apparatus supports federated learning.

For example, the first network element may determine an NF instance identifier (for example, an NFc instance ID) of the federated learning server based on the identifier (for example, the NF service consumer) of the federated learning server included in the token request message, then determine an NFc profile (which may also be referred to as configuration information) of the federated learning server, and determine, based on a parameter or information in the NFc profile, that the federated learning server supports federated learning. For example, the federated learning server is an NWDAF including an MTLF.

For another example, the first network element may determine an NF instance identifier (for example, an NFp instance ID) of the client apparatus based on the identifier (for example, the NF producer consumer) of the client apparatus included in the token request message, then determine an NFp profile of the client apparatus, and determine, based on a parameter in the NFp profile, that the client apparatus supports federated learning. For example, the client apparatus is an NWDAF including an MTLF.

In other words, the first network element determines, based on the identifier of the federated learning server and/or the identifier of the client apparatus, that the federated learning server and/or the client apparatus supports federated learning, to further trigger the first network element to determine whether the client apparatus is allowed to obtain the second model from the federated learning server, that is, trigger execution of related steps of step 502.

(2) The first network element determines, based on information about the first service and/or the federated learning capability type included in the token request message, that the token request message is associated with federated learning, where the first service is used for federated learning between the federated learning server and the client apparatus.

It should be understood that, when the first service is used for federated learning, the first service can enable the federated learning server NWDAF to start a federated learning process, obtain information about a local ML model (namely, the first model) and an FL training status report from the client apparatus NWDAF, and then provide information about a global ML model (namely, the second model) to the client apparatus NWDAF.

It should be understood that, when the first service is used for federated learning, the first service can enable the federated learning server NWDAF to start the federated learning process. Optionally, the federated learning server NWDAF sends an initial model (namely, the second model) to the client apparatus, and obtains the information about the local ML model (namely, the first model) and the FL training status report from the client apparatus NWDAF. Herein, the local model is obtained by the client by training the initial model based on the local data. Then, the information about the global ML model (namely, the second model) is provided to the client apparatus NWDAF.

Optionally, the federated learning server NWDAF may also use the first service to check whether the client apparatus can meet an ML model training requirement in the federated learning process. Alternatively, the federated learning server NWDAF may use the first service to request the client apparatus to calculate and provide model precision of the global ML model.

For example, the information about the first service may be the name (for example, Service name) of the first service. The first network element may determine, based on Service name=ML model Training Subscribe/Nnwdaf_MLModelTrainingInfo included in the token request message, that the first service is ML model training subscription, that is, may determine that the token request message is associated with federated learning. Therefore, it may be determined that the token request message is used by the federated learning server to request the first network element to authorize an access token used for federated learning. It may be understood that, currently, an ML model Training Subscribe/Nnwdaf_MLModelTrainingInfo service is used only in federated learning. Therefore, it may be determined that the token request message is associated with federated learning.

For another example, the federated learning capability type (FL capability type) may be an FL server or an FL client, for indicating the federated learning server or the client apparatus. The first network element may determine, based on FL capability type=FL Client included in the token request message, that the token request message is associated with federated learning. Therefore, it may be determined that the token request message is used by the federated learning server to request the first network element to authorize an access token used for federated learning.

For another example, the first network element may determine, based on another IE related to federated learning and included in the token request message, that the token request message is associated with federated learning. Therefore, it may be determined that the token request message is used by the federated learning server to request the first network element to authorize an access token used for federated learning.

In other words, the first network element determines, based on the information about the first service and/or the federated learning capability type included in the token request message, that the token request message is associated with federated learning, to further trigger the first network element to determine whether the client apparatus is allowed to obtain the second model from the federated learning server.

(3) The first network element determines, based on first indication information, that the federated learning server sends the second model to the client apparatus.

That the first indication information indicates to send the second model to the client apparatus may be understood as: The first indication information indicates that the federated learning server supports sending the second model to the client apparatus, or the first indication information indicates that the federated learning server is to send the second model to the client apparatus, or the first indication information indicates that the federated learning server will send the second model to the client apparatus, or the first indication information indicates that the federated learning server can send the second model to the client apparatus.

Optionally, the first indication information may be included in the token request message, or may be included in the configuration information of the federated learning server, for example, the NF profile of the federated learning server.

In other words, the first network element determines, based on the fact that the federated learning server is to (or will/supports/can) send (or sending) the second model to the client apparatus, whether the client apparatus is allowed to obtain the second model from the federated learning server.

(4) The first network element determines, based on second indication information, that the client apparatus expects to obtain the second model.

That the second indication information indicates that the client apparatus expects to obtain the second model may be understood as: The second indication information indicates that the client apparatus requests to obtain the second model.

Optionally, the second indication information may be included in the token request message, or may be included in the configuration information of the client apparatus, for example, the NF profile of the client apparatus.

In other words, the first network element determines, based on the fact that the client apparatus expects (or requests) to obtain the second model, whether the client apparatus is allowed to obtain the second model from the federated learning server.

Optionally, the "determining" action in the four examples provided above may be performed or may not be performed. For example, in the example (1), the first network element determines, based on the identifier of the federated learning server and/or the identifier of the client apparatus, that the client apparatus is allowed to obtain the second model from the federated learning server. For example, in the example (2), the first network element determines, based on the information about the first service and/or the federated learning capability type included in the token request message, that the client apparatus is allowed to obtain the second model from the federated learning server. For example, in the example (3), the first network element determines, based on the first indication information, that the client apparatus is allowed to obtain the second model from the federated learning server. For example, in the example (4), the first network element determines, based on the second indication information, that the client apparatus is allowed to obtain the second model from the federated learning server. In other words, at least one of the identifier of the federated learning server and/or the identifier of the client apparatus, the information about the first service and/or the federated learning capability type, the first indication information, or the second indication information may be used as a trigger condition for the first network element to determine that the client apparatus is allowed to obtain the second model from the federated learning server.

It should be understood that the foregoing implementations are merely examples provided for ease of understanding, and other implementations are not excluded. The foregoing plurality of implementations may be implemented independently or in combination. This is not limited in this application. For example, the first network element may determine, based on the federated learning capability type and the second indication information, that the client apparatus is allowed to obtain the second model from the federated learning server.

Optionally, after the first network element determines that the client apparatus is allowed to obtain the second model from the federated learning server, the method may further include the following step S520c.

S520c: The first network element sends third indication information to the federated learning server.

Correspondingly, the federated learning server receives the third indication information from the first network element.

The third indication information indicates that the client apparatus is allowed to obtain the second model from the federated learning server.

Optionally, the third indication information may be included in the first token, that is, sent to the federated learning server in step S520. Alternatively, the third indication information may not be included in the first token. This is not limited in this application.

It should be noted that, when the third indication information is not included in the first token, a sending occasion and a sending manner of the first token and the third indication information are not limited in this application.

In a first example, when the first network element determines that the federated learning server is allowed to obtain the first model corresponding to the first analytics identifier from the client apparatus, the first network element may send the first token to the federated learning server, and when the first network element determines that the client apparatus is allowed to obtain the second model from the federated learning server, the first network element may send the third indication information to the federated learning server. In other words, the first token and the first indication information may be separately sent.

In a second example, when the first network element determines that the federated learning server is allowed to obtain the first model corresponding to the first analytics identifier from the client apparatus, and that the client apparatus is allowed to obtain the second model from the federated learning server, the first network element may send the first token and the third indication information to the federated learning server. In other words, the first token and the first indication information may be sent at the same time.

The following describes, by using examples, manners of obtaining the first analytics identifier, the second analytics identifier, the device vendor identifier of the federated learning server, and the device vendor identifier of the client apparatus in step S510 and step S520, and manners of obtaining the configuration information (NF Profile) of the federated learning server and the configuration information (NF Profile) of the client apparatus. For example, the foregoing items may be obtained through a registration procedure or a discovery procedure. Specific steps are described below.

Optionally, before the federated learning server sends the token request message to the first network element, the method further includes the following step S501 and step S502, namely, registration procedures of the federated learning server and the client apparatus.

S501: The registration procedure of the federated learning server

For example, the federated learning server sends a first registration request message to the first network element, to request to register with a network, where the first registration request message includes the configuration information (for example, the NF profile) of the federated learning server. It may be understood that the service configuration information is the NF profile, or may be included in the NF profile, where the NF profile includes the first interoperability indicator. Correspondingly, the first network element receives the first registration request message, and stores the NF profile, where the first interoperability indicator is used to determine, in step S520a, whether the client apparatus is allowed to obtain the second model from the federated learning server. The first network element sends a first registration response message to the federated learning server, to indicate that registration of the federated learning server is completed. For a specific implementation, refer to the related descriptions of the method 200.

Optionally, the first registration request message may be an Nnrf_NFManagement_NFRegister_request message, and the first registration response message may be an Nnrf_NFManagement_NFRegister_response message.

Optionally, the first registration request message may further include one or more of the following: the identifier of the federated learning server, the name (service name) of the first service supported by the federated learning server, the device vendor identifier of the federated learning server, the first indication information, the NF type, the first analytics identifier, address information of the federated learning server, a service area, FL capability type information (for example, an FL server), a time interval at which the federated learning server supports FL, or the like. For specific explanations, refer to the foregoing related descriptions. The device vendor identifier of the federated learning server is used to determine, in step S520b, whether the federated learning server is allowed to obtain the first model from the client apparatus.

S502: The registration procedure of the client apparatus

For example, the client apparatus sends a second registration request message to the first network element, to request to register with the network, where the second registration request message includes the configuration information (for example, the NF profile) of the client apparatus. It may be understood that the service configuration information is the NF profile, or may be included in the NF profile, where the NF profile includes the device vendor identifier of the client apparatus. Correspondingly, the first network element receives the second registration request message, and stores the NF profile, where the device vendor identifier of the client apparatus is used to determine, in step S520a, whether the client apparatus is allowed to obtain the second model from the federated learning server. The first network element sends a second registration response message to the federated learning server, to indicate that registration of the client apparatus is completed. For a specific implementation, refer to the related descriptions of the method 200.

Optionally, the second registration request message may be an Nnrf_NFManagement_NFRegister_request message, and the second registration response message may be an Nnrf_NFManagement_NFRegister_response message.

Optionally, the second registration request message may further include one or more of the following: the identifier of the client apparatus, the name (service name) of the first service supported by the client apparatus, the second interoperability indicator, the second indication information, the NF type, the first analytics identifier, the address information of the client apparatus, the service area, the FL capability type information (for example, an FL client), a time interval during which the client apparatus supports the FL, or the like. For specific explanations, refer to the foregoing related descriptions. The second interoperability indicator is used to determine, in step S520b, whether the federated learning server is allowed to obtain the first model from the client apparatus.

Optionally, before the federated learning server sends the token request message to the first network element, the method further includes the following step S503, namely, a procedure in which the federated learning server requests to discover the client apparatus.

S503: The federated learning server performs the procedure of discovering the client apparatus.

For example, the federated learning server sends a discovery request message to the first network element, to request to discover the available client apparatus in the network. The discovery request message includes an NF type (for example, an FL Client NWDAF) of an expected NF instance and/or an expected federated learning capability type (for example, an FL Client). Correspondingly, the first network element receives the discovery request message, and selects the client apparatus. The first network element sends a discovery response message to the federated learning server, to indicate that the federated learning server is allowed to discover the expected NF instance (for example, the client apparatus). For a specific implementation, refer to the related descriptions of the method 200. The discovery response message includes the configuration information (for example, the NF profile) of the client apparatus. For the configuration information of the client apparatus, refer to the related descriptions of step S502.

Optionally, the discovery request message may be an Nnrf_NFDiscovery_Request message, and the discovery response message may be an Nnrf_NFDiscovery_Response message.

Optionally, the discovery request message may further include at least one of the following: the identifier of the federated learning server, the identifier of the client apparatus, an expected service name (for example, Service name=ML model Training Subscribe/Nnwdaf_MLModelTrainingInfo), the first analytics identifier, an NF type of an NF instance of the federated learning server, a federated learning capability type (for example, an FL Server) of the federated learning server, an expected target NF position, or the like. For specific explanations, refer to the foregoing related descriptions.

Optionally, the federated learning server may discover the client apparatus based on a local mechanism.

S530: The federated learning server obtains, from the client apparatus based on the first token, the first model corresponding to the first analytics identifier.

In an implementation, the federated learning server sends a federated learning preparation request message to the client apparatus, where the federated learning preparation request message includes the first analytics identifier and the first token, and is used to request the client apparatus to prepare to participate in performing federated learning. Correspondingly, the client apparatus verifies the first token, and determines whether to join federated learning. The client apparatus sends a federated learning preparation response message to the federated learning server, indicating that the client apparatus agrees to join federated learning. Further, the federated learning server starts the federated learning process, and the client apparatus generates the first model based on the local data and sends the first model to the federated learning server. For a specific implementation, refer to the related descriptions of the method 300.

Optionally, the federated learning preparation request message may be a Federated Learning preparation request message, for example, Nnwdaf_MLModelTraining_Subscribe or Nnwdaf_MLModelTrainingInfo_Request. The federated learning preparation response message may be a Federated Learning preparation response message, for example, Nnwdaf_MLModelTraining_Notify, or Nnwdaf_MLModelTraining_Subscribe response service operation, or Nnwdaf_MLModelTrainingInfo_Request response.

Optionally, the federated learning preparation request message may alternatively be an ML model Training Subscribe request message, and the federated learning preparation response message may alternatively be ML model Training Notify.

That the client apparatus generates the first model based on the local data includes: The client apparatus generates the first model based on the local data and the initial model or the basic model provided by the federated learning server in the federated learning process; or the client apparatus performs federated learning training based on an initial model generated by the client apparatus and the local data, to obtain the first model. A specific implementation thereof is not limited in this application.

Optionally, before the federated learning server sends the initial model or the basic model, the method further includes: The federated learning server determines, based on the received first token or third indication information, that the client apparatus has permission to obtain the second model from the federated learning server, and then sends the initial model or the basic model to the client apparatus. In this case, the initial model or the basic model may be considered as the second model. Optionally, if there is no security risk in transmission of the initial model or the basic model, the foregoing determining may not be performed.

S540: The federated learning server generates the second model based on the first model.

It should be understood that the first model is generated by the client apparatus and is used by the federated learning server to generate the second model.

For example, for the same federated learning process, a plurality of client apparatuses participate in performing federated learning. To be specific, after locally training to obtain first models, the plurality of client apparatuses send the first models to the federated learning server. The federated learning server may perform aggregation on the first models from different client apparatuses to obtain a global ML model, namely, the second model. For a specific implementation, refer to the related descriptions of the method 400.

S550: The federated learning server sends the second model to the client apparatus based on the first token and/or the third indication information.

Correspondingly, the client apparatus receives the second model from the federated learning server.

Optionally, the federated learning server may directly send the second model to the client apparatus, or the federated learning server may send an identifier of the second model, for example, a model ID, to the client apparatus. In this case, the federated learning server further sends the NF instance ID of the federated learning server to the client, and the client apparatus may request, based on the NF instance ID and the model ID, to obtain the second model from the federated learning server.

In a first implementation, the first token indicates that the federated learning server is allowed to obtain, from the client apparatus, the first model corresponding to the first analytics identifier, and the client apparatus is allowed to obtain the second model from the federated learning server. In this case, after generating the second model, the federated learning server may send the second model to the client apparatus based on the first token.

In a second implementation, the federated learning server may determine, based on the third indication information, that the client apparatus is allowed to obtain the second model from the federated learning server. In this case, the federated learning server may send the second model to the client apparatus based on the third indication information.

The foregoing two implementations may be implemented independently or in combination. This is not limited in this application.

Optionally, before the federated learning server sends the second model to the client apparatus, the federated learning server may further determine that the client apparatus expects to obtain the second model. In other words, the method further includes the following step S550a. Based on this implementation, when the client apparatus needs to obtain the second model, the federated learning server sends the second model to the client apparatus, so that unnecessary transmission overheads can be reduced, model leakage risks can be reduced, and model asset security can be protected.

S550a: The federated learning server determines that the client apparatus expects to obtain the second model.

In a first example, the federated learning server sends the second model to the client apparatus based on the second indication information.

The second indication information indicates that the client apparatus expects to obtain the second model.

Optionally, before step S550a is performed, the method further includes: The federated learning server obtains the second indication information. For example, the federated learning server may receive the second indication information from the first network element, or the federated learning server may receive the second indication information from the client apparatus.

For example, when the discovery procedure in step S503 is performed, the federated learning server may obtain the configuration information of the client apparatus from the first network element, where the configuration information of the client apparatus includes the second indication information, indicating that the client apparatus expects to obtain the second model.

For another example, after step S520 of obtaining the first token is performed, the first network element may further send the second indication information to the federated learning server, to indicate that the client apparatus expects to obtain the second model.

For another example, after obtaining the first token, the federated learning server may receive the second indication information from the client apparatus in a process in which the client apparatus is requested to prepare to participate in federated learning. For example, the federated learning server sends the federated learning preparation request message to the client apparatus based on the first token. Correspondingly, after verification of the first token succeeds, the client apparatus may notify the federated learning server that the client apparatus agrees to participate in federated learning. In addition, the client apparatus may send the second indication information to the federated learning server, to request to obtain the second model after federated learning is completed.

For another example, after the federated learning server starts the federated learning process, in the federated learning training process, the client may send the second indication information to the federated learning server. For example, the client apparatus may send the second indication information when sending the first model to the federated learning server, or the client apparatus may send the second indication information after sending the first model to the federated learning server.

In a second example, the federated learning server sends the second model to the client apparatus based on a local configuration.

For example, if the local configuration indicates that the client apparatus participating in the federated learning process expects to obtain the global ML model (namely, the second model), the federated learning server may send the second model to the client apparatus based on the local configuration.

It should be noted that the local configuration may be predefined or preconfigured. The predefinition may include predefinition, for example, protocol definition. The preconfiguration may be implemented by pre-storing corresponding code, a corresponding table, a corresponding character string, or another manner indicating related information in the federated learning server. A specific implementation thereof is not limited in this application.

It should be understood that the foregoing examples are merely examples provided for ease of understanding, and other implementations are not excluded. The foregoing plurality of implementations may be implemented independently or in combination. This is not limited in this application. For example, the federated learning server sends the second model to the client apparatus based on the second indication information and the local configuration, where the second indication information indicates that the client apparatus expects to obtain the second model.

For example, if the federated learning server sends the identifier of the second model, for example, the model ID, to the client apparatus, the federated learning server further sends the NF instance ID of the federated learning server to the client. In this case, the client apparatus requests, based on the NF instance ID and the model ID, to obtain the second model from the federated learning server.

Based on the foregoing solution, before sending the first token, the first network element determines that the federated learning server (for example, the server NWDAF) is allowed to obtain, from the client apparatus (for example, the client NWDAF), the first model corresponding to the first analytics identifier, and also determines that the client apparatus is allowed to obtain the second model from the federated learning server. This indicates that the client apparatus supports federated learning, and has permission to obtain the model. In this way, the federated learning server may deliver, to the client apparatus, the second model obtained by completing federated learning, thereby avoiding leakage of second model information, reducing security risks, and avoiding loss of model property rights of a device vendor.

In addition, it is considered that the discovery procedure in step S503 is an optional step, that is, the federated learning server may locally discover the client apparatus. If the federated learning server does not have a capability of checking whether the client apparatus is allowed to obtain the second model from the federated learning server, and the first network element does not check permission of the client apparatus in the first token obtaining procedure, a client that is not allowed to obtain the second model from the federated learning server may still obtain the second model after federated learning ends, causing leakage of the second model information and increasing a potential security risk. Therefore, in the first token obtaining procedure, the first network element performs permission check on whether the client apparatus is allowed to obtain the second model from the federated learning server, and gives a notification to the federated learning server. In this way, the federated learning server does not send the second model obtained through federated learning training to a client apparatus that does not have model obtaining permission, thereby reducing risks of model leakage and ensuring network security and model asset security of the device vendor.

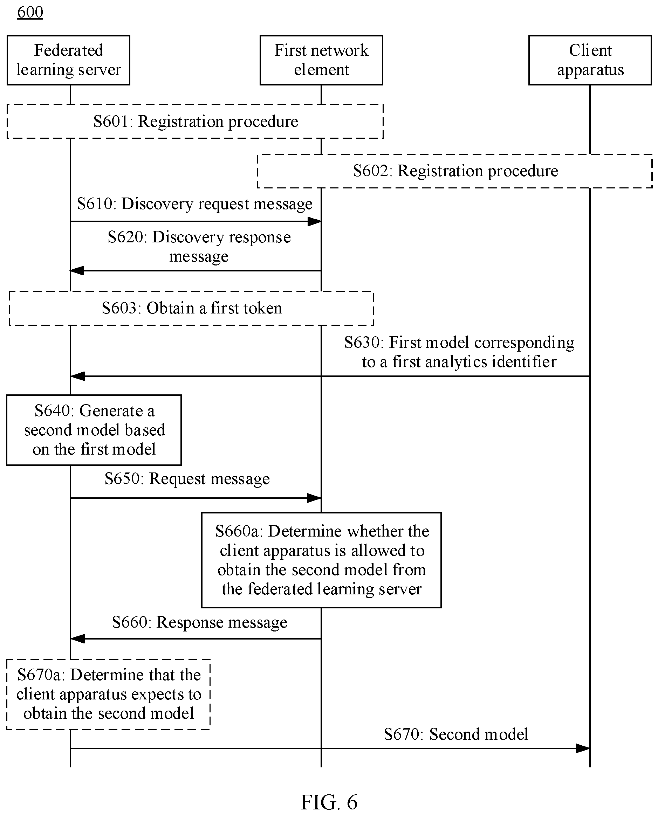

FIG. 6 is a schematic flowchart of a communication method 600 according to an embodiment of this application. As shown in FIG. 6, the method procedure may include the following plurality of steps. For parts that are not described in detail, refer to the foregoing existing protocols.

S610: A federated learning server sends a discovery request message to a first network element.

Correspondingly, the first network element receives the discovery request message from the federated learning server.

The discovery request message includes a first analytics identifier, and is used to request to discover a network element that supports federated learning training corresponding to the first analytics identifier, or in other words, is used to discover a network element that supports training of a model corresponding to the first analytics identifier.

Optionally, the discovery request message may further include at least one of the following: an identifier of the federated learning server, an NF type of an expected NF instance (for example, an FL Client NWDAF), an expected federated learning capability type (for example, an FL Client), an expected service name (for example, Service name=ML model Training Subscribe/Nnwdaf_MLModelTrainingInfo), an NF type of an NF instance of the federated learning server, a federated learning capability type (for example, an FL Server) of the federated learning server, an expected target NF position, or the like. For specific explanations, refer to the foregoing related descriptions.

Optionally, the discovery request message may be an Nnrf_NFDiscovery_Request message.

S620: The first network element sends a discovery response message to the federated learning server.

Correspondingly, the federated learning server receives the discovery response message from the first network element.

The discovery response message includes an identifier of a client apparatus.

Optionally, the discovery response message may include configuration information (for example, an NFp Profile) of the client apparatus. For the configuration information of the client apparatus, refer to the related descriptions of step S502.

Optionally, the discovery response message may be an Nnrf_NFDiscovery_Response message.

It should be understood that step S610 and step S620 are for a procedure in which the federated learning server requests an NRF to discover the client apparatus. For a specific implementation, refer to the related descriptions of the method 200.

Optionally, before step S610 is performed, the method may further include the following step S601 and step S602, that is, a registration procedure of the federated learning server and a registration procedure of the client apparatus.

S601: The registration procedure of the federated learning server

S602: The registration procedure of the client apparatus

For specific implementations of step S601 and step S602, refer to the related descriptions of step S501 and step S502 in the method 500.

S630: The federated learning server obtains, from the client apparatus, a first model corresponding to the first analytics identifier.

In an implementation, the federated learning server obtains, from the client apparatus based on a first token, the first model corresponding to the first analytics identifier. For a specific implementation, refer to the related descriptions of step S530 in the method 500.

Optionally, before the federated learning server obtains, from the client apparatus, the first model corresponding to the first analytics identifier, the method further includes the following step S603, that is, a procedure of obtaining the first token.

S603: The federated learning server obtains the first token.

For example, the federated learning server sends a token request message to the first network element, to request to obtain the first token. Correspondingly, when determining that the federated learning server is allowed to obtain, from the client apparatus, the first model corresponding to the first analytics identifier, the first network element sends the first token to the federated learning server. For a specific implementation, refer to the related descriptions of the method 200.

It should be understood that, in the process of obtaining the first token, that the first network element determines that the federated learning server is allowed to obtain, from the client apparatus, the first model corresponding to the first analytics identifier may be specifically: The first network element determines that a device vendor identifier of the federated learning server is included in a second interoperability indicator corresponding to the first analytics identifier supported by the client apparatus, or the first network element determines that the second interoperability indicator corresponding to the first analytics identifier supported by the client apparatus includes the device vendor identifier of the federated learning server. For a specific implementation, refer to the related descriptions of step S502b in the method 500.

Optionally, in the process of obtaining the first token, that the first network element determines that the federated learning server is allowed to obtain, from the client apparatus, the first model corresponding to the first analytics identifier may be specifically: The first network element determines that a first interoperability indicator corresponding to the first analytics identifier supported by the federated learning server is included in the second interoperability indicator corresponding to the first analytics identifier supported by the client apparatus, or the first network element determines that the second interoperability indicator corresponding to the first analytics identifier supported by the client apparatus includes the second interoperability indicator of the federated learning server.

S640: The federated learning server generates a second model based on the first model.

For a specific implementation in which the federated learning server generates the second model based on the first model, refer to the related descriptions of step S540 in the method 500.

With reference to step S650 and step S660, the following describes an example in which the federated learning server sends a request message to the first network element, to request the first network element to perform permission check on whether the client is allowed to obtain the second model from the federated learning server, so as to determine that the client is allowed to obtain the second model from the federated learning server.

S650: The federated learning server sends the request message to the first network element.

Correspondingly, the first network element receives the request message from the federated learning server.

The request message is used to request to confirm whether the client apparatus is allowed to obtain the second model from the federated learning server, and the request message includes the first analytics identifier.

Optionally, the request message may further include the configuration information (for example, the NFp profile) of the client apparatus and/or configuration information (for example, an NFc profile) of the federated learning server, and includes one or more of the following: the identifier of the federated learning server, the identifier of the client apparatus, the first interoperability indicator, the device vendor identifier of the federated learning server, a device vendor identifier of the client apparatus, first indication information, second indication information, or the like. For specific explanations, refer to the related descriptions of the method 500.

It should be understood that the federated learning server may obtain the configuration information (for example, the NFp profile) of the client apparatus from the first network element by using step S620.

S660: The first network element sends a response message to the federated learning server when determining that the client apparatus is allowed to obtain the second model from the federated learning server.

Correspondingly, the federated learning server receives the response message from the first network element.

The response message indicates that the client apparatus is allowed to obtain the second model from the federated learning server.

Optionally, the response message may include third indication information, and the third indication information indicates that the client apparatus is allowed to obtain the second model from the federated learning server. Optionally, the third indication information may not be included in the response message, that is, the response message and the third indication information may be separately and independently sent.

In an implementation, before the first network element sends the response message to the federated learning server, the method 600 may further include the following step S660a.

S660a: The first network element determines whether the client apparatus is allowed to obtain the second model from the federated learning server.

In an example, the first network element determines whether the device vendor identifier of the client apparatus is included in the first interoperability indicator corresponding to the first analytics identifier supported by the federated learning server, or in other words, the first network element determines whether the first interoperability indicator corresponding to the first analytics identifier supported by the federated learning server includes the device vendor identifier of the client apparatus. For a specific implementation, refer to the related descriptions of step S520a in the method 500.

In an example, the first network element determines whether the second interoperability indicator corresponding to the first analytics identifier supported by the client apparatus is included in the first interoperability indicator corresponding to the first analytics identifier supported by the federated learning server, or in other words, the first network element determines whether the first interoperability indicator corresponding to the first analytics identifier supported by the federated learning server includes the second interoperability indicator corresponding to the first analytics identifier supported by the client apparatus. For a specific implementation, refer to the related descriptions of step S520a in the method 500.

S670: The federated learning server sends the second model to the client apparatus.

Correspondingly, the client apparatus receives the second model from the federated learning server.

In other words, the federated learning server may send the second model to the client based on the response message in step S660.

For example, if the federated learning server sends an identifier of the second model, for example, a model ID, to the client apparatus, the federated learning server further sends an NF instance ID of the federated learning server to the client. In this case, the client apparatus requests, based on the NF instance ID and the model ID, to obtain the second model from the federated learning server.

Optionally, before the federated learning server sends the second model to the client apparatus, the method further includes the following step S670a.

S670a: The federated learning server determines that the client apparatus expects to obtain the second model.

In a first example, the federated learning server sends the second model to the client apparatus based on the second indication information.

In a second example, the federated learning server sends the second model to the client apparatus based on a local configuration.

For a manner of obtaining the second information and a specific implementation in which the federated learning server determines that the client apparatus expects to obtain the second model, refer to the related descriptions of step S550a in the method 500.

Based on the foregoing solution, after obtaining the second model, the federated learning server requests the first network element to check permission of a client apparatus, to determine that the client apparatus is allowed to obtain the second model from the federated learning server. In this way, the federated learning server may deliver the second model to a client apparatus that has model obtaining permission, thereby avoiding model information leakage, reducing potential security risks, avoiding loss of model property rights of a device vendor, and the like.

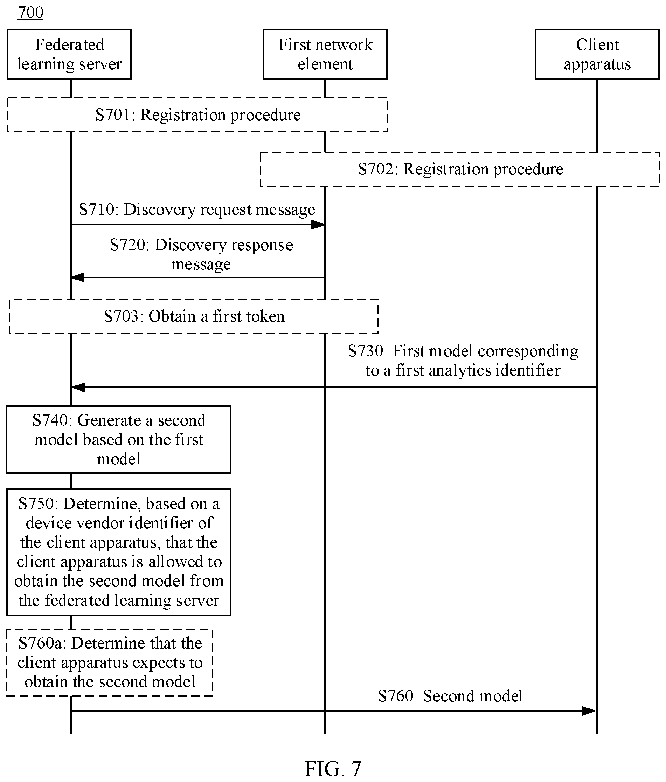

FIG. 7 is a schematic flowchart of a communication method 700 according to an embodiment of this application. As shown in FIG. 7, the method procedure may include the following plurality of steps. For parts that are not described in detail, refer to the foregoing existing protocols.

S710: A federated learning server sends a discovery request message to a first network element.

Correspondingly, the first network element receives the discovery request message from the federated learning server.

The discovery request message includes a first analytics identifier, and is used to request to discover a network element that supports federated learning training corresponding to the first analytics identifier, or in other words, is used to discover a network element that supports training of a model corresponding to the first analytics identifier.

S720: The federated learning server receives a discovery response message from the first network element.

Correspondingly, the first network element receives the discovery response message from the federated learning server.

The discovery response message includes an identifier of a client apparatus and a device vendor identifier of the client apparatus. The device vendor identifier of the client apparatus is used in a candidate step S750 to determine that the client apparatus is allowed to obtain a second model from the federated learning server.

Optionally, the discovery response message may include configuration information (for example, an NFp Profile) of the client apparatus. For the configuration information of the client apparatus, refer to the related descriptions of step S502.

It should be understood that step S710 and step S720 are for a procedure in which the federated learning server requests an NRF to discover the client apparatus. For a specific implementation, refer to the related descriptions of the method 200.

Optionally, before step S710 is performed, the method may further include the following step S701 and step S702, that is, a registration procedure of the federated learning server and a registration procedure of the client apparatus.

S701: The registration procedure of the federated learning server

S702: The registration procedure of the client apparatus

For specific implementations of step S701 and step S702, refer to the related descriptions of step S601 and step S602 in the method 600.

S730: The federated learning server obtains, from the client apparatus, a first model corresponding to the first analytics identifier.

For a specific implementation, refer to the related descriptions of step S630 in the method 600.

Optionally, before the federated learning server obtains, from the client apparatus, the first model corresponding to the first analytics identifier, the method further includes the following step S703, that is, a procedure of obtaining a first token.

S703: The federated learning server obtains the first token.

For the procedure of obtaining the first token, refer to the related descriptions of the method 200.

It should be understood that, in the process of obtaining the first token, the first network element determines that the federated learning server is allowed to obtain, from the client apparatus, the first model corresponding to the first analytics identifier. For a specific implementation, refer to the related descriptions of step S603 in the method 600.

S740: The federated learning server generates the second model based on the first model.

For a specific implementation in which the federated learning server generates the second model based on the first model, refer to the related descriptions of step S540 in the method 500.

With reference to step S750, the following describes an example in which permission check is performed, for federated learning, on whether the client is allowed to obtain the second model from the federated learning server, so as to determine that the client is allowed to obtain the second model from the federated learning server.

S750: The federated learning server determines, based on the device vendor identifier of the client apparatus, that the client apparatus is allowed to obtain the second model from the federated learning server.

In an implementation, if the federated learning server determines that the device vendor identifier of the client apparatus is included in a first interoperability indicator corresponding to the first analytics identifier supported by the federated learning server, or in other words, the first interoperability indicator corresponding to the first analytics identifier supported by the federated learning server includes the device vendor identifier of the client apparatus, the federated learning server may determine that the client apparatus is allowed to obtain the second model from the federated learning server.

In other words, if the federated learning server determines that the device vendor identifier of the client apparatus is included in a device vendor identifier list supported by the federated learning server, the federated learning server may determine that the client apparatus can obtain the second model from the federated learning server. On the contrary, if the federated learning server determines that the device vendor identifier of the client apparatus is not included in the device vendor identifier list supported by the federated learning server, the federated learning server may determine that the client apparatus cannot obtain the second model from the federated learning server.

In an implementation, if the federated learning server determines that a second interoperability indicator corresponding to the first analytics identifier supported by the client apparatus is included in the first interoperability indicator corresponding to the first analytics identifier supported by the federated learning server, or in other words, the first interoperability indicator corresponding to the first analytics identifier supported by the federated learning server includes the second interoperability indicator corresponding to the first analytics identifier supported by the client apparatus, the federated learning server may determine that the client apparatus is allowed to obtain the second model from the federated learning server.

In other words, if the federated learning server determines that the second interoperability indicator corresponding to the first analytics identifier supported by the client apparatus is included in the device vendor identifier list supported by the federated learning server, the federated learning server may determine that the client apparatus can obtain the second model from the federated learning server. On the contrary, if the federated learning server determines that the second interoperability indicator corresponding to the first analytics identifier supported by the client apparatus is not included in the device vendor identifier list supported by the federated learning server, the federated learning server may determine that the client apparatus cannot obtain the second model from the federated learning server.

S760: The federated learning server sends the second model to the client apparatus.

Correspondingly, the client apparatus receives the second model from the federated learning server.

In other words, the federated learning server may determine, based on permission check in step S750, that the client is allowed to obtain the second model from the federated learning server, and then the federated learning server may send the second model to the client apparatus.

For example, if the federated learning server sends an identifier of the second model, for example, a model ID, to the client apparatus, the federated learning server further sends an NF instance ID of the federated learning server to the client. In this case, the client apparatus requests, based on the NF instance ID and the model ID, to obtain the second model from the federated learning server.

Optionally, before the federated learning server sends the second model to the client apparatus, the method further includes the following step S760a.

S760a: The federated learning server determines that the client apparatus expects to obtain the second model.

In a first example, the federated learning server sends the second model to the client apparatus based on second indication information.

In a second example, the federated learning server sends the second model to the client apparatus based on a local configuration.

For a manner of obtaining the second information and a specific implementation in which the federated learning server determines that the client apparatus expects to obtain the second model, refer to the related descriptions of step S550a in the method 500.

Based on the foregoing solution, after obtaining the second model, the federated learning server performs permission check on the client apparatus based on the device vendor identifier of the client obtained in a discovery procedure, that is, determines that the client apparatus is allowed to obtain the second model from the federated learning server, or in other words, the client apparatus has permission to obtain the second model. In this case, the federated learning server may deliver the second model to the client apparatus, thereby reducing risks of information leakage of the second model, avoiding loss of model property rights of a device vendor, and the like.

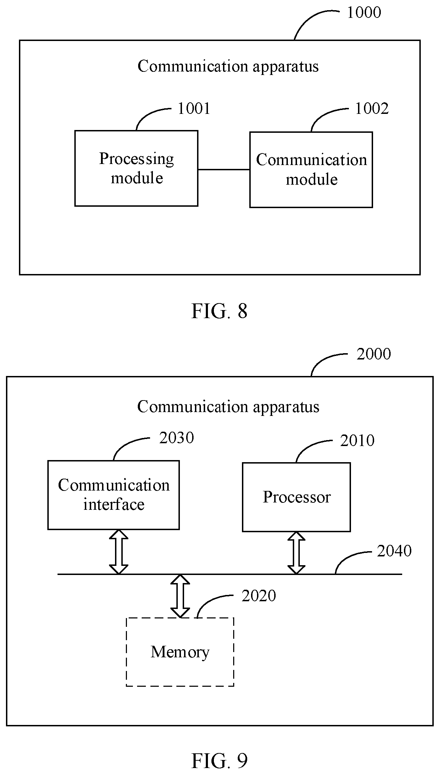

The foregoing describes embodiments on a communication method side of this application with reference to FIG. 1 to FIG. 7. The following describes in detail embodiments on a communication apparatus side of this application with reference to FIG. 8 and FIG. 9. It should be understood that descriptions of the apparatus embodiments correspond to the descriptions of the method embodiments. Therefore, for parts that are not described in detail, refer to the foregoing method embodiments.

FIG. 8 is a diagram of a communication apparatus 1000 according to an embodiment of this application. As shown in FIG. 8, the communication apparatus 1000 includes a communication module 1002 and a processing module 1001. The communication apparatus 1000 may be a first network element, or may be a communication apparatus that is used in the first network element or is used in a matching manner with the first network element and that can implement the method performed by the first network element, for example, a chip, a chip system, or a circuit. Alternatively, the communication apparatus 1000 may be a federated learning server, or may be a communication apparatus that is used in the federated learning server or is used in a matching manner with the federated learning server and that can implement the method performed by the federated learning server, for example, a chip, a chip system, or a circuit. Alternatively, the communication apparatus 1000 may be a client apparatus, or may be a communication apparatus that is used in the client apparatus or is used in a matching manner with the client apparatus and that can implement the method performed by the client apparatus, for example, a chip, a chip system, or a circuit.

The communication module 1002 may also be referred to as a transceiver module, a transceiver, a transceiver machine, a transceiver apparatus, or the like. The processing module 1001 may also be referred to as a processor, a processing board, a processing unit, a processing apparatus, or the like. Optionally, the communication module 1002 is configured to perform sending and receiving operations of the first network element, the federated learning server, or the client apparatus in the methods. A component in the communication module 1002 used to implement a receiving function may be considered as a receiving unit, and a component in the communication module 1002 used to implement a sending function may be considered as a sending unit. In other words, the communication module 1002 includes the receiving unit and the sending unit.

When the communication apparatus 1000 is used in the first network element, the processing module 1001 may be configured to implement a processing function of the first network element in the foregoing embodiments, and the communication module 1002 may be configured to implement a transceiver function of the first network element in the foregoing embodiments.

For example, the communication module 1002 is configured to receive a token request message from the federated learning server, where the token request message includes a first analytics identifier, an identifier of the federated learning server, and an identifier of the client apparatus. The communication module 1002 is further configured to send a first token to the federated learning server after determining that the federated learning server is allowed to obtain, from the client apparatus, a first model corresponding to the first analytics identifier, and the client apparatus is allowed to obtain a second model from the federated learning server.

When the communication apparatus 1000 is used in the federated learning server, the processing module 1001 may be configured to implement a processing function of the federated learning server in the foregoing embodiments, and the communication module 1002 may be configured to implement a transceiver function of the federated learning server in the foregoing embodiments.

For example, the communication module 1002 is configured to send a token request message to the first network element, where the token request message includes a first analytics identifier, an identifier of the federated learning server, and an identifier of the client apparatus. The communication module 1002 is further configured to: receive a first token from the first network element, or receive a first token and third indication information from the first network element, where the first token indicates that the client apparatus is allowed to obtain a second model from the federated learning server, and the third indication information indicates that the client apparatus is allowed to obtain the second model from the federated learning server. The communication module 1002 is further configured to obtain, from the client apparatus based on the first token, a first model corresponding to the first analytics identifier. The processing module 1001 is configured to generate the second model based on the first model. The communication module 1002 is further configured to send the second model to the client apparatus based on the first token and/or the third indication information.

When the communication apparatus 1000 is used in the client apparatus, the processing module 1001 may be configured to implement a processing function of the client apparatus in the foregoing embodiments, and the communication module 1002 may be configured to implement a transceiver function of the client apparatus in the foregoing embodiments.

In addition, it should be noted that the communication module and/or the processing module may be implemented through a virtual module. For example, the processing module may be implemented through a software functional unit or a virtual apparatus, and the communication module may be implemented through a software function or a virtual apparatus. Alternatively, the processing module or the communication module may be implemented through a physical apparatus. For example, if the apparatus is implemented by using a chip/circuit (for example, an integrated circuit or a logic circuit), the communication module may be an input/output circuit and/or a communication interface, and performs an input operation (corresponding to the foregoing receiving operation) and an output operation (corresponding to the foregoing sending operation); and the processing module is an integrated processor, a microprocessor, or a circuit (for example, an integrated circuit or a logic circuit).

Division into modules in this application is an example, is merely logical function division, and may be other division during actual implementation. In addition, functional modules in examples of this application may be integrated into one processor, each of the modules may exist alone physically, or two or more modules may be integrated into one module. The integrated module may be implemented in a form of hardware, or may be implemented in a form of a software functional module.

FIG. 9 is a diagram of another communication apparatus 2000 according to an embodiment of this application. As shown in FIG. 9, optionally, the communication apparatus 2000 may be a chip or a chip system. Optionally, in this application, the chip system may include a chip, or may include a chip and another discrete component.

The communication apparatus 2000 may be configured to implement functions of any network element (for example, a first network element, a federated learning server, or a client apparatus) in the communication system described in the foregoing examples. The communication apparatus 2000 may include a communication interface 2030 and a processor 2010. The communication apparatus 2000 may exchange information with another device through the communication interface 2030. For example, the communication interface 2030 may be a transceiver, a circuit, a bus, a module, a pin, or a communication interface of another type. When the communication apparatus 2000 is a chip-type apparatus or circuit, the communication interface 2030 in the apparatus 2000 may alternatively be an input/output circuit, and may input information (or referred to as receiving information) and output information (or referred to as sending information). The processor 2010 is an integrated processor, a microprocessor, an integrated circuit, a logic circuit, or the like, and the processor may determine output information based on input information.

Optionally, the processor 2010 is coupled to a memory. The memory may be located in the apparatus. Alternatively, the memory may be integrated with the processor. Alternatively, the memory may be located outside the apparatus. For example, the communication apparatus 2000 may further include at least one memory 2020. The memory 2020 stores a computer program, a computer program or instructions, and/or data that are necessary for implementing any one of the foregoing examples. The processor 2010 may execute the computer program stored in the memory 2020, to perform the method in any one of the foregoing examples.

The coupling in this application may be an indirect coupling or a communication connection between apparatuses, units, or modules in an electrical form, a mechanical form, or another form, and is used for information exchange between the apparatuses, the units, or the modules. The processor 2010 may operate collaboratively with the memory 2020 and the communication interface 2030. A specific connection medium between the processor 2010, the memory 2020, and the communication interface 2030 is not limited in this application.

Optionally, as shown in FIG. 9, the processor 2010, the memory 2020, and the communication interface 2030 are connected to each other through a bus 2040. Optionally, the bus may include a type of bus like an address bus, a data bus, or a control bus. In addition, for ease of representation, FIG. 9 shows one bus 2040, but this does not mean that there is only one bus or only one type of bus.

It should be understood that the processor mentioned in embodiments of this application may be the following device or a part of circuits configured for a processing function in the following device: a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification is intended to include, but is not limited to, these and any other appropriate type of memory.

An embodiment of this application further provides a computer-readable storage medium. The computer-readable storage medium stores computer instructions for implementing a method performed by at least one of the first network element, the federated learning server, or the client apparatus in the foregoing method embodiments.

An embodiment of this application further provides a computer program product, including instructions. When the instructions are executed by a computer, a method performed by at least one of the first network element, the federated learning server, or the client apparatus in the foregoing method embodiments is implemented.

An embodiment of this application further provides a communication system. The communication system includes at least one of the first network element, the federated learning server, or the client apparatus in the foregoing embodiments.

For explanations and beneficial effect of related content in any one of the apparatuses provided above, refer to the corresponding method embodiment provided above. Details are not described herein again.

Sequence numbers of the foregoing processes do not mean execution sequences in various embodiments of this application. The execution sequences of the processes should be determined based on functions and internal logic of the processes, and should not be construed as any limitation on the implementation processes of embodiments of this application.

In this application, without a logical contradiction, mutual reference can be made between examples. For example, mutual reference can be made between methods and/or terms in method embodiments, mutual reference can be made between functions and/or terms in apparatus embodiments, and mutual reference can be made between functions and/or terms in apparatus examples and method examples.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each unit may exist alone physically, or two or more units may be integrated into one unit.

When functions are implemented in a form of a software functional unit and sold or used as an independent product, the functions may be stored in a computer-readable storage medium. Based on such an understanding, the technical solutions of this application essentially, or the part contributing to the conventional technologies, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A secure communication method, comprising:
receiving a token request message from a federated learning server, wherein the token request message comprises a first analytics identifier, an identifier of the federated learning server, and an identifier of a client apparatus; and
sending a first token to the federated learning server after determining that the federated learning server is allowed to obtain, from the client apparatus, a first model corresponding to the first analytics identifier, and that the client apparatus is allowed to obtain a second model from the federated learning server.

2. The method according to claim 1, wherein
the first model is generated by the client apparatus and is used by the federated learning server to generate the second model; and/or
the second model is provided by the federated learning server and is used by the client apparatus to generate the first model.

3. The method according to claim 1 or 2, wherein the first token indicates that the client apparatus is allowed to obtain the second model from the federated learning server.

4. The method according to claim 1 or 2, wherein the method further comprises:
sending third indication information to the federated learning server, wherein the third indication information indicates that the client apparatus is allowed to obtain the second model from the federated learning server.

5. The method according to any one of claims 1 to 4, wherein determining that the client apparatus is allowed to obtain the second model from the federated learning server comprises:
determining that a device vendor identifier of the client apparatus is comprised in a first interoperability indicator corresponding to the first analytics identifier supported by the federated learning server.

6. The method according to claim 5, wherein before receiving the token request message from the federated learning server, the method further comprises:
receiving a first registration request message from the federated learning server, wherein the first registration request message comprises the first interoperability indicator; and
sending a first registration response message to the federated learning server, wherein the first registration response message indicates that registration is completed.

7. The method according to claim 5 or 6, wherein before receiving the token request message from the federated learning server, the method further comprises:
receiving a second registration request message from the client apparatus, wherein the second registration request message comprises the device vendor identifier of the client apparatus; and
sending a second registration response message to the client apparatus, wherein the second registration response message indicates that registration is completed.

8. The method according to any one of claims 1 to 7, wherein determining that the federated learning server is allowed to obtain the first model corresponding to the first analytics identifier from the client apparatus comprises:
determining that a device vendor identifier of the federated learning server is comprised in a second interoperability indicator corresponding to the first analytics identifier supported by the client apparatus.

9. The method according to any one of claims 1 to 8, wherein before determining that the client apparatus is allowed to obtain the second model from the federated learning server, the method further comprises:
determining, based on the identifier of the federated learning server and/or the identifier of the client apparatus, that the federated learning server and/or the client apparatus supports federated learning;
determining, based on information about a first service and/or a federated learning capability type carried in the token request message, that the token request message is associated with federated learning, wherein the first service is used for federated learning between the federated learning server and the client apparatus;
determining, based on first indication information, that the federated learning server sends the second model to the client apparatus, wherein the first indication information indicates to send the second model to the client apparatus; or
determining, based on second indication information, that the client apparatus expects to obtain the second model, wherein the second indication information indicates that the client apparatus expects to obtain the second model.

10. A secure communication method, comprising:
sending a token request message to a first network element, wherein the token request message comprises a first analytics identifier, an identifier of a federated learning server, and an identifier of a client apparatus;
receiving a first token from the first network element, or receiving a first token and the third indication information from the first network element, wherein the first token indicates that the client apparatus is allowed to obtain a second model from the federated learning server, and the third indication information indicates that the client apparatus is allowed to obtain the second model from the federated learning server;
obtaining, from the client apparatus based on the first token, a first model corresponding to the first analytics identifier;
generating the second model based on the first model; and
sending the second model to the client apparatus based on the first token and/or the third indication information.

11. The method according to claim 10, wherein sending the second model to the client apparatus comprises:
sending the second model to the client apparatus based on second indication information and/or a local configuration, wherein the second indication information indicates that the client apparatus expects to obtain the second model.

12. The method according to claim 11, wherein the method further comprises:
receiving the second indication information from the first network element or the client apparatus.

13. The method according to any one of claims 10 to 12, wherein that the client apparatus is allowed to obtain the second model from the federated learning server comprises:
a device vendor identifier of the client apparatus is comprised in a first interoperability indicator corresponding to the first analytics identifier supported by the federated learning server.

14. The method according to claim 13, wherein before sending the token request message to the first network element, the method further comprises:
sending a first registration request message to the first network element, wherein the first registration request message comprises the first interoperability indicator; and
receiving a first registration response message from the first network element, wherein the first registration response message indicates that registration is completed.

15. A secure communication method, comprising:
sending a discovery request message to a first network element, wherein the discovery request message comprises a first analytics identifier;
receiving a discovery response message from the first network element, wherein the discovery response message comprises an identifier of a client apparatus and a device vendor identifier of the client apparatus;
obtaining, from the client apparatus, a first model corresponding to the first analytics identifier;
generating a second model based on the first model; and
sending the second model to the client apparatus after determining, based on the device vendor identifier of the client apparatus, that the client apparatus is allowed to obtain the second model from a federated learning server.

16. The method according to claim 15, wherein determining, based on the device vendor identifier of the client apparatus, that the client apparatus is allowed to obtain the second model from the federated learning server comprises:
determining that the device vendor identifier of the client apparatus is comprised in a first interoperability indicator corresponding to the first analytics identifier supported by the federated learning server.

17. The method according to claim 16, wherein before sending the discovery request message to the first network element, the method further comprises:
sending a first registration request message to the first network element, wherein the first registration request message comprises the first interoperability indicator; and
receiving a first registration response message from the first network element, wherein the first registration response message indicates that registration is completed.

18. The method according to any one of claims 15 to 17, wherein sending the second model to the client apparatus comprises:
sending the second model to the client apparatus based on second indication information and/or a local configuration, wherein the second indication information indicates that the client apparatus expects to obtain the second model.

19. The method according to claim 18, wherein the method further comprises:
receiving the second indication information from the first network element or the client apparatus.

20. A secure communication method, comprising:
receiving a discovery request message from a federated learning server, wherein the discovery request message comprises a first analytics identifier;
sending a discovery response message to the federated learning server when determining that the federated learning server is allowed to obtain, from a client apparatus, a first model corresponding to the first analytics identifier, wherein the discovery response message comprises an identifier of the client apparatus;
receiving a request message from the federated learning server, wherein the request message is used to request to confirm whether the client apparatus is allowed to obtain a second model from the federated learning server, and the request message comprises the first analytics identifier; and
sending a response message to the federated learning server when determining that the client apparatus is allowed to obtain the second model from the federated learning server.

21. The method according to claim 20, wherein the response message comprises third indication information, and the third indication information indicates that the client apparatus is allowed to obtain the second model from the federated learning server.

22. The method according to claim 20 or 21, wherein determining that the client apparatus is allowed to obtain the second model from the federated learning server comprises:
determining that a device vendor identifier of the client apparatus is comprised in a first interoperability indicator corresponding to the first analytics identifier supported by the federated learning server.

23. The method according to claim 22, wherein before receiving the discovery request message from the federated learning server, the method further comprises:
receiving a first registration request message from the federated learning server, wherein the first registration request message comprises the first interoperability indicator; and
sending a first registration response message to the federated learning server, wherein the first registration response message indicates that registration is completed.

24. The method according to claim 22 or 23, wherein before receiving the discovery request message from the federated learning server, the method further comprises:
receiving a second registration request message from the client apparatus, wherein the second registration request message comprises the device vendor identifier of the client apparatus; and
sending a second registration response message to the client apparatus, wherein the second registration response message indicates that registration is completed.

25. The method according to any one of claims 20 to 24, wherein determining that the federated learning server is allowed to obtain the first model corresponding to the first analytics identifier from the client apparatus comprises:
determining that the device vendor identifier of the federated learning server is comprised in a second interoperability indicator corresponding to the first analytics identifier supported by the client apparatus.

26. A secure communication method, comprising:
sending a discovery request message to a first network element, wherein the discovery request message comprises a first analytics identifier;
receiving a discovery response message from the first network element, wherein the discovery response message comprises an identifier of a client apparatus;
obtaining, from the client apparatus, a first model corresponding to the first analytics identifier;
generating a second model based on the first model;
sending a request message to the first network element, wherein the request message is used to request to confirm whether the client apparatus is allowed to obtain the second model from a federated learning server, and the request message comprises the first analytics identifier;
receiving a response message from the first network element, wherein the response message indicates that the client apparatus is allowed to obtain the second model from the federated learning server; and
sending the second model to the client apparatus.

27. The method according to claim 26, wherein the method further comprises:
receiving third indication information from the first network element, wherein the third indication information indicates that the client apparatus is allowed to obtain the second model from the federated learning server.

28. The method according to claim 26 or 27, wherein sending the second model to the client apparatus comprises:
sending the second model to the client apparatus based on second indication information and/or a local configuration, wherein the second indication information indicates that the client apparatus expects to obtain the second model.

29. The method according to claim 28, wherein the method further comprises:
receiving the second indication information from the first network element or the client apparatus.

30. A secure communication method, comprising:
receiving a token request message from a federated learning server, wherein the token request message comprises a first analytics identifier, an identifier of the federated learning server, and an identifier of a client apparatus; and
sending a first token to the federated learning server after determining that a device vendor identifier of the client apparatus is comprised in a first interoperability indicator corresponding to the first analytics identifier supported by the federated learning server, and that a device vendor identifier of the federated learning server is comprised in a second interoperability indicator corresponding to the first analytics identifier supported by the client apparatus.

31. A communication apparatus, comprising one or more functional modules, wherein the one or more functional modules or network elements are configured to perform the method according to any one of claims 1 to 9, 20 to 25, or 30, or the one or more functional modules or network elements are configured to perform the method according to any one of claims 10 to 14, 15 to 19, or 26 to 29.

32. A communication apparatus, comprising at least one processor, wherein the at least one processor is configured to execute a computer program or instructions, so that the method according to any one of claims 1 to 9 or 20 to 25 is performed, or the method according to any one of claims 10 to 14, 15 to 19, or 26 to 29 is performed.

33. The communication apparatus according to claim 32, wherein
the communication apparatus further comprises a memory, and the memory is configured to store the computer program or the instructions; and/or
the communication apparatus further comprises a communication interface, wherein the communication interface is coupled to the at least one processor, and the communication interface is configured to input and/or output information.

34. The communication apparatus according to claim 32 or 33, wherein the communication apparatus is a chip or a chip system.

35. A communication system, comprising a first network element and a federated learning server, wherein the first network element is configured to perform the method according to any one of claims 1 to 9, 20 to 25, or 30, and the federated learning server is configured to perform the method according to any one of claims 10 to 14, 15 to 19, or 26 to 29.

36. A computer-readable storage medium, wherein the computer-readable storage medium stores a computer program, and when the computer program runs, the computer is enabled to perform the method according to any one of claims 1 to 30.

37. A computer program product, comprising instructions, wherein when the instructions are run on a computer, the method according to any one of claims 1 to 30 is implemented.
